# EUROPEAN PATENT APPLICATION

(11) **EP 2 527 974 A2**
(43) Date of publication of application: **28.11.2012**
(21) Application number: 12003867.4
(22) Date of filing: 16.05.2012
(51) Int. Cl.: G06F 9/44

(54) **Mobile terminal and mode controlling method therein**

(30) Priority: 27.05.2011 KR 20110050667
(71) Applicant: LG Electronics Inc., Yeongdeungpo-gu Seoul 150-721 (KR)
(72) Inventor: Kwon, Yunmi, Geumcheon-gu Seoul 153-801 (KR); Yoon, Sunghye, Geumcheon-gu Seoul 153-801 (KR); Choi, Jaeho, Geumcheon-gu Seoul 153-801 (KR); Chang, Minkyoung, Geumcheon-gu Seoul 153-801 (KR)
(74) Representative: Beyer, Andreas

(57) **Abstract**

A mobile terminal including a communication unit configured to communicate with at least one external terminal; a memory configured to store at least first and second operating systems including at least first and second modes, respectively; and a controller configured to execute the first operating system and activate the first mode corresponding to the first operating system, display a first information screen on a display unit corresponding to the activated first mode, receive a switching command signal, acquire whether the switching command signal is a mode switching command for switching the first mode to the second mode or a screen switching command for switching the first information screen to another information screen in the first mode using an input pattern of the received switching command signal, switch from the first mode to the second mode by activating the second mode and deactivating the first mode if the switching command signal is the mode switching command, and display the another information screen on the display unit corresponding to the activated first mode if the switching command signal is the screen switching command.

## Description

### BACKGROUND OF THE INVENTION

### Field of the Invention

The present invention relates to a mobile terminal, and more particularly, to a mobile terminal and mode controlling method therein. Although the present invention is suitable for a wide scope of applications, it is particularly suitable for implementing a plurality of modes of the mobile terminal.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support and increase of the terminal functions, it may be able to consider the improvement of structural part and/or software part of the terminal.

Recently, a mobile terminal tends to be used for a business need as well as a personal need. In addition, it is necessary to implement the mobile terminal suitable for both of the personal need and the business need. Moreover, the demand for using the mobile terminal for the purpose of the personal need or the business need separately keeps rising.

However, a mobile terminal according to a related art fails in providing a terminal use environment in accordance with various needs including the personal need, the business need and the like.

### SUMMARY OF THE INVENTION

Accordingly, the present invention is directed to a mobile terminal and mode controlling method therein that substantially obviate one or more problems due to limitations and disadvantages of the related art.

An object of the present invention is to provide a mobile terminal and mode controlling method therein, by which a terminal use environment in accordance with various needs including the personal need, the business need and the like can be provided.

Another object of the present invention is to provide a mobile terminal and mode controlling method therein, by which a plurality of inter-mode switching operations can be efficiently performed in case of implementing a plurality of modes corresponding to various needs.

Another object of the present invention is to provide a mobile terminal and mode controlling method therein, by which a plurality of intra-screen switching operations can be efficiently performed in the same mode in case of configuring a plurality of screens in a plurality of modes, respectively.

A further object of the present invention is to provide a mobile terminal and mode controlling method therein, by which a mode switching operation and a screen switching operation can be selectively performed to correspond to an input pattern of a switching command.

To achieve these objects and other advantages and in accordance with the purpose of the invention, as embodied and broadly described herein, a mobile terminal according to the present invention includes at least one operating system capable of implementing a plurality of modes including a 1^{st} mode and a 2^{nd} mode, at least one application executed in at least one of a plurality of the modes, a user input unit receiving an input of a switching command externally, and a controller acquiring whether the switching command is a mode switching command or a screen switching command using an input pattern of the switching command, the controller, if the switching command is the mode switching command, performing a mode switching operation among a plurality of the modes, the controller, if the switching command is the screen switching command, performing a screen switching operation among a plurality of screens corresponding to a currently activated mode.

In another aspect of the present invention, a method of controlling modes in a mobile terminal, which is capable of implementing a plurality of modes including a 1^{st} mode and a 2^{nd} mode, includes the steps of activating the 1^{st} mode, displaying a screen of the activated 1^{st} mode, receiving a switching command externally, acquiring whether the switching command is a mode switching command or a screen switching command using an input pattern of the switching command, if the switching command is the mode switching command, performing a mode switching operation among a plurality of the modes, and if the switching command is the screen switching command, performing a screen switching operation among a plurality of screens corresponding to a currently activated mode, wherein the mobile terminal includes an operating system capable of implementing a plurality of the modes and at least one application executed in at least one of a plurality of the modes.

Accordingly, the present invention provides the following effects and/or advantages.

First of all, the present invention differentiates a mode switching command and a screen switching command using an input pattern of a switching command, thereby facilitating an input of the mode switching command or the screen switching command.

Secondly, the present invention can give a command for switching to a prescribed one of a plurality of modes by differentiating an input pattern of a mode switching command, thereby facilitating a user to select a mode to switch to.

Thirdly, the present invention can input a command for shifting to a specific screen together with a mode switching command, thereby displaying a specific screen designated by a user in direct without a screen turning action after a switching to a specific mode in case of performing the switching to the specific mode.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
- FIG. 1: is a block diagram of a mobile terminal according to one embodiment of the present invention;
- FIG. 2A: is a front perspective diagram of a mobile terminal according to one embodiment of the present invention;
- FIG. 2B: is a rear perspective diagram of a mobile terminal according to one embodiment of the present invention;
- FIGs. 3A to 3C: are block diagrams of components required for implementation of a plurality of modes and a mode switching among a plurality of the modes according to the present invention;
- FIGs. 4A to 4C: are block diagrams of components required for operating a plurality of operating system for implementing a plurality of modes according to the present invention;
- FIGs. 5A to 10C: are diagrams for discriminating a plurality of modes according to the present invention;
- FIG. 11 is: a flowchart for a mode controlling method in a mobile terminal according to one embodiment of the present invention;
- FIGs. 12A to 12C: are diagrams of screen configurations for performing a screen switching operation or a mode switching operation to correspond to an input pattern according to the present invention;
- FIG. 13A and FIG. 13B: are diagrams for a detailed screen switching operation according to the present invention;
- FIG. 14A and FIG. 14B: are diagrams for a detailed mode switching operation according to the present invention;
- FIGs. 15A to 15E: are first diagrams for displaying a multi-mode screen according to the present invention;
- FIGs. 16A to 16C: are second diagrams for displaying a multi-mode screen according to the present invention;
- FIG. 17A and FIG. 17B: are diagrams for performing an authentication procedure in case of a mode switching operation according to the present invention;
- FIGs. 18A to 18C: are diagrams for performing a mode switching operation in a common application executed state according to the present invention;
- FIG. 19A and FIG. 19B: are diagrams for performing a mode switching operation in a dedicated application executed state according to the present invention;
- FIGs. 20A to 22B: are diagrams for a temporary mapping state of screens in case of performing a mode switching operation according to the present invention;
- FIGs. 23A to 24B: are diagrams for performing a mode switching operation to correspond to a page turning action according to the present invention;
- FIGs. 25A to 25C: are diagrams for controlling a specific screen of a 2^{nd} mode to be displayed in case of a mode switching operation from a 1^{st} mode to the 2^{nd} mode according to the present invention; and
- FIGs. 26A to 27B: are diagrams for storing data/content in a 2^{nd} mode in case of storing the same data/content in a 1^{st} mode according to the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except a case applicable to a mobile terminal only, it is apparent to those skilled in the art that the configurations according to an embodiment described in this disclosure is applicable to such a stationary terminal as a digital TV, a desktop computer and the like.

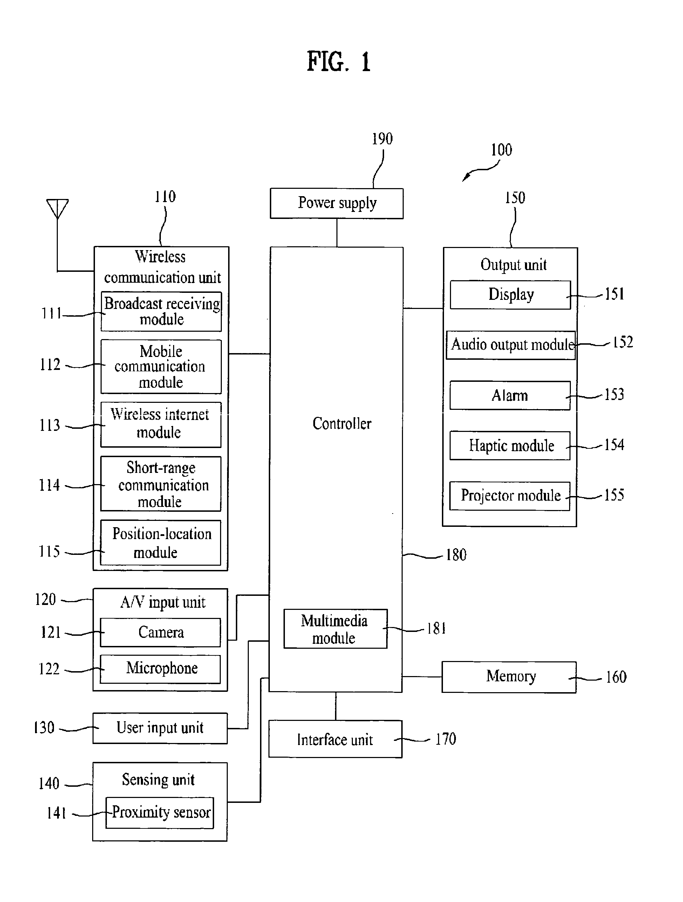

FIG. 1 is a block diagram of a mobile terminal according to one embodiment of the present invention.

Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. In addition, the broadcast associated information can be provided via a mobile communication network. In this instance, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By a non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this instance, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. In addition, the processed image frames can be displayed on the display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminals 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. In addition, the sensing unit 140 can include a proximity sensor 141.

The output unit 150 generates outputs relevant to the senses of sight, hearing, touch and the like. In addition, the output unit 150 includes the display unit 151, an audio output module 152, an alarm unit 153, a haptic module 154, a projector module 155 and the like.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display unit 151 can be implemented in the optical transmittive type as well. In this configuration, a user can see an object in rear of a terminal body via the area occupied by the display unit 151 of the terminal body.

At least two display units 151 can be provided to the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

When the display unit 151 and a sensor for detecting a touch action (hereinafter called 'touch sensor') configures a mutual layer structure (hereinafter called 'touchscreen'), it can use the display unit 151 as an input device as well as an output device. In this instance, the touch sensor can be configured as a touch film, a touch sheet, a touchpad or the like.

The touch sensor can be configured to convert a pressure applied to a specific portion of the display unit 151 or a variation of a capacitance generated from a specific portion of the display unit 151 to an electric input signal. Moreover, it can configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 can know whether a prescribed portion of the display unit 151 is touched. Referring to FIG. 1, a proximity sensor 141 can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. When the touchscreen includes the electrostatic capacity proximity sensor, it is configured to detect the proximity of a pointer using a variation of electric field according to the proximity of the pointer. In this instance, the touchscreen (touch sensor) can be classified as the proximity sensor.

In the following description, for clarity, an action that a pointer approaches without contacting with the touchscreen to be recognized as located on the touchscreen is named 'proximity touch'. In addition, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor 141 detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be output to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 can output a signal for announcing the event occurrence by way of vibration as well as video or audio signal. The video or audio signal can be output via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be output in a manner of being synthesized together or can be output in sequence.

The haptic module 154 can generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. In addition, the projector module 155 can display an image, which is identical to or partially different at least from the image displayed on the display unit 151, on an external screen or wall according to a control signal of the controller 180.

In particular, the projector module 155 can include a light source generating light (e.g., laser) for projecting an image externally, an image producing means for producing an image to output externally using the light generated from the light source, and a lens for enlarging to output the image externally in a predetermined focus distance. In addition, the projector module 155 can further include a device for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. In addition, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. In addition, a recent use history or a cumulative use frequency of each data (e.g., use frequency for each phonebook, each message or each multimedia) can be stored in the memory unit 160. Moreover, data for various patterns of vibration and/or sound output in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. In addition, the mobile terminal 100 can operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 can perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

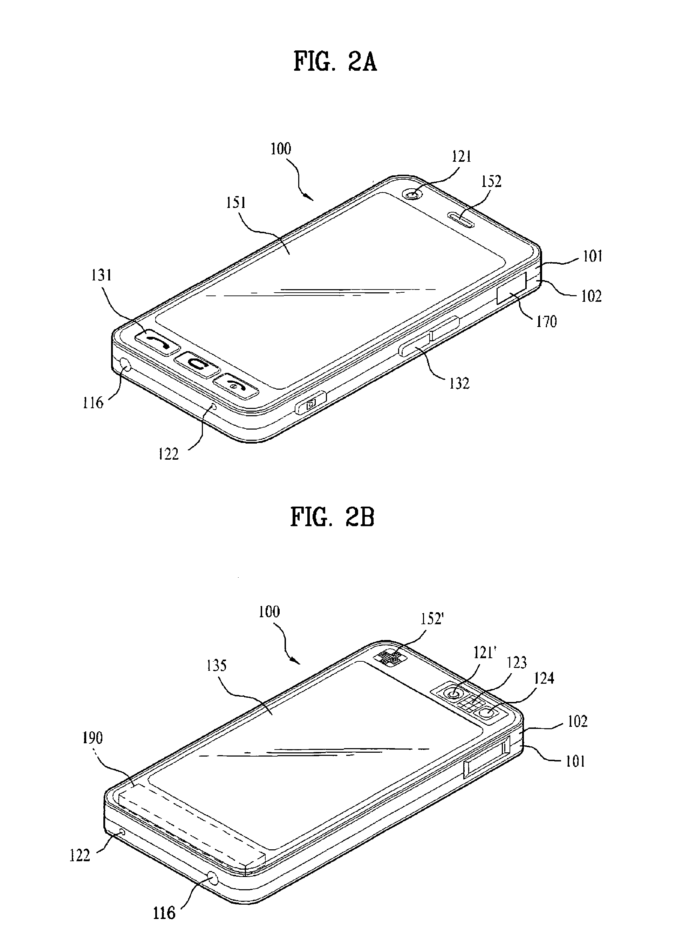

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display unit 151, an audio output unit 152, a camera 121, user input units 130/131 and 132, a microphone 122, an interface 180 and the like can be provided to the terminal body, and more particularly, to the front case 101.

The display unit 151 occupies most of a main face of the front case 101. The audio output unit 151 and the camera 121 are provided to an area adjacent to one of both end portions of the display unit 151, while the user input unit 131 and the microphone 122 are provided to another area adjacent to the other end portion of the display unit 151. The user input unit 132 and the interface 170 can be provided to lateral sides of the front and rear cases 101 and 102.

The input unit 130 is manipulated to receive a command for controlling an operation of the terminal 100. In addition, the input unit 130 can include a plurality of manipulating units 131 and 132. The manipulating units 131 and 132 can be named a manipulating portion and may adopt any mechanism of a tactile manner that enables a user to perform a manipulation action by experiencing a tactile feeling.

Content input by the first or second manipulating unit 131 or 132 can be diversely set. For instance, such a command as start, end, scroll and the like is input to the first manipulating unit 131. In addition, a command for a volume adjustment of sound output from the audio output unit 152, a command for a switching to a touch recognizing mode of the display unit 151 or the like can be input to the second manipulating unit 132.

FIG. 2B is a perspective diagram of a backside of the terminal shown in FIG. 2A.

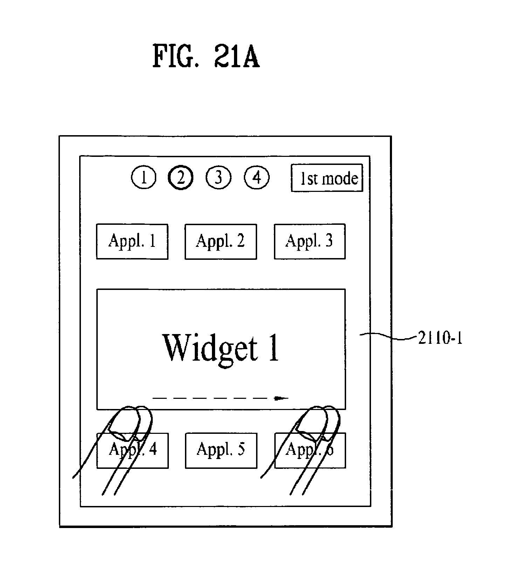

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. In addition, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. When a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' can implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. In addition, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display unit 151. In this instance, if the display unit 151 is configured to output visual information from its both faces, it can recognize the visual information via the touchpad 135 as well. The information output from both of the faces can be entirely controlled by the touchpad 135. Alternatively, a display is further provided to the touchpad 135 so that a touchscreen can be provided to the rear case 102 as well.

The touchpad 135 is activated by interconnecting with the display unit 151 of the front case 101. The touchpad 135 can be provided in rear of the display unit 151 in parallel. The touchpad 135 can have a size equal to or smaller than that of the display unit 151.

First of all, a mobile terminal mentioned in the following description can include at least one of the components shown in FIG. 1. In addition, in order to perform an operation using the components (e.g., touchscreen, wireless communication unit, memory, etc.), the controller 180 can control an individual operation of each of the components or interconnected operations among a plurality of the components.

Applications mentioned in this disclosure are software programs drivable in a mobile terminal. If the application is driven, it can execute a corresponding function or operation. The application is basically stored in the mobile terminal (particularly, memory 160) or can be downloaded from an external server of an external terminal.

For example, the applications can include a compass, an augmented reality, a camera, a video player, a music player, a game, a news, a web browser, a message, a phonebook, a memo, a schedule management, and the like. Of course, the allocations are non-limited by this example and can be implemented in more various ways.

There can exist contents or data associated with the applications as well. In this instance, the associated content or data is stored in the memory 160 or can be stored in an external server having a storage space.

For instance, the contents can include an audio file (associated with the music player), a video file (associated with the video player), a document file (associated with an e-book), and the like. In addition, the data can include a message content (associated with the message), a memo content (associated with the memo), a counterpart information (associated with the phonebook), a schedule content (associated with the schedule management), and the like.

According to the present invention, a mobile terminal can configure a plurality of modes differing from each other in application configuration for data security for one mode against another mode or data security between different modes. In addition, the mobile terminal according to the present invention can implement a plurality of the modes selectively or simultaneously (or sequentially).

When a specific application is executed in a prescribed mode, at least one application interoperable with the specific application can be executed in the prescribed mode. For instance, if a specific application is a voice call, an application interoperable with the voice call can include a phonebook, a message and the like.

Regarding mode discrimination in application configuration, an application executable in each of a plurality of modes can include at least one application (hereinafter named a dedicated application) executable by being dedicated to each of a plurality of the modes or at least one application (hereinafter named a common application) executable in any one of a plurality of the modes. In particular, the common application can change at least one feature in each of a plurality of the modes in which the corresponding application is executable. For instance, at least one of configuration, representation, security and the like of the common application is changeable. This shall be described in detail later.

Of course, the common application may not change its feature in each of a plurality of the modes in which the corresponding application is executable. For instance, if the common application includes such a basic terminal application as a voice call, a message and the like, it may not change its feature.

For example, if first to third applications are executed in a first mode and if the third application, a fourth application and a fifth application are executed in a second mode, the first and second applications, the third application and the fourth and fifth application can be called the dedicated applications of the first mode, the common application of the first and second modes and the dedicated applications of the second mode, respectively.

A plurality of modes can include a first mode (i.e., a private mode) facilitating user's personal life, a second mode (i.e., a business mode) facilitating a user's work life, and the like. This enables a mobile terminal to be discriminatively used in consideration of a user's personal life (e.g., privacy) and a user's public life (e.g., work life). In particular, in aspect of security reinforcement, when either a private mode or a business mode is implemented, restriction can be put on an access to information corresponding to the other mode.

The above-described private mode and the business mode are just the examples for describing a plurality of the modes. If the above-described private mode and the business mode are suitable for the mode discrimination reference mentioned in this disclosure, they are non-limited by their names. Although the mode discrimination of a plurality of the modes is explained in the above description based on the application configuration, it shall be described in detail with reference to the accompanying drawings later.

Implementation and activation of a plurality of modes mentioned in the description of the present invention shall be defined as follows.

First of all, according to the present invention, a mobile terminal can implement a plurality of modes all and is also able to activate one of a plurality of the currently implemented modes. For instance, if a plurality of the modes include a first mode and a second mode, the mobile terminal boots an operating system capable of implementing both of the first and second modes to implement can then activate the implemented first or second mode selectively.

In particular, if both of the first and second modes are already implemented, the mode for displaying an executed screen on a current screen, the mode for designating the currently executed application, the mode having a high priority or the like can be called an activated mode. In this instance, a non-activated mode (or a deactivated mode) can be regarded as operating as a background despite being implemented in the mobile terminal. In more particular, if an executed screen of the first mode and an executed screen of the second mode are being displayed on a first region and a second region of the screen through screen partition, respectively, the mode selected by a user, the mode for activating the corresponding region currently, the mode for designating a currently executed application, the mode having a high priority or the like can be regarded as activated.

Occasionally, after the mobile terminal has implemented and activated one mode, if the mobile terminal attempts to switch the current mode to the other mode, the mobile terminal can implement and activate the other mode (i.e., selective implementation and activation of mode).

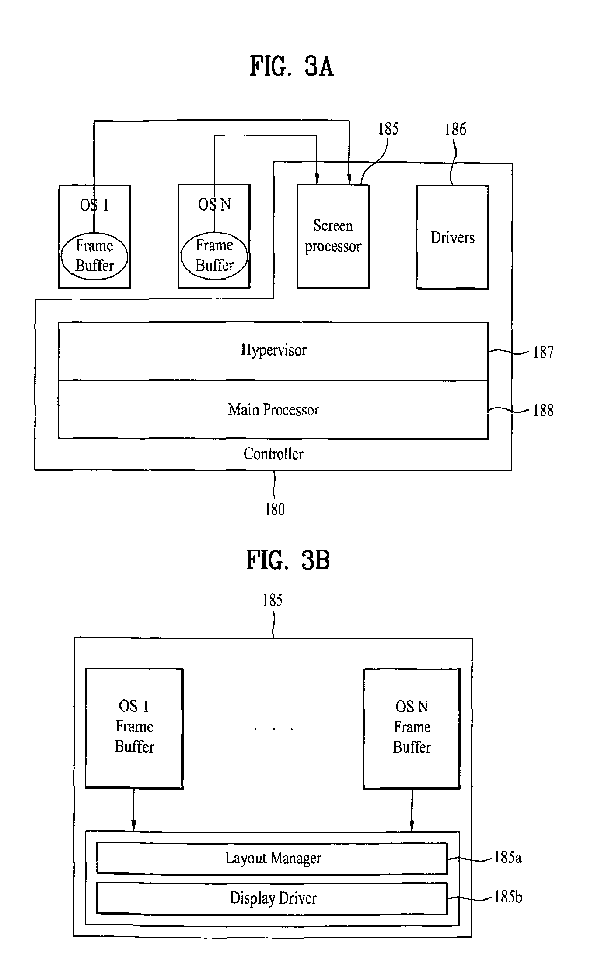

In the following description, implementation of a plurality of modes and operations of components required for inter-mode switching for a plurality of the modes are explained in detail with reference o FIGs. 3A to 4C.

FIGs. 3A to 3C are block diagrams of components required for implementation of a plurality of modes and a mode switching among a plurality of the modes according to the present invention.

FIG. 3A is a block diagram of a controller 180 for driving a plurality of operating systems (OSs) and configuring a dedicated screen of a plurality of operating systems.

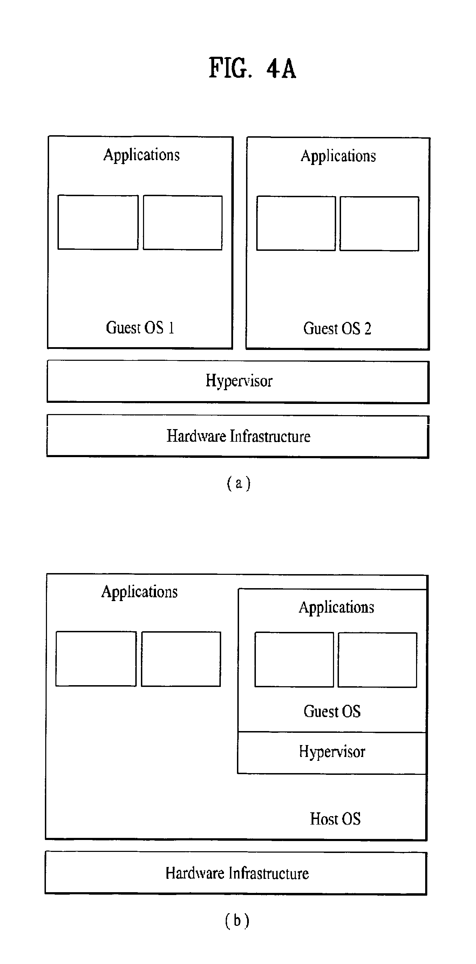

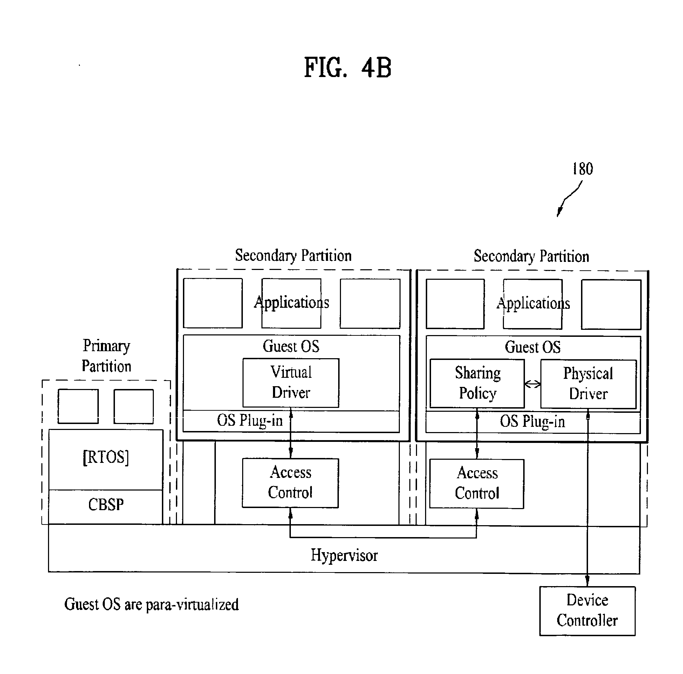

In addition, FIG. 3B is a block diagram of a screen processor 185 shown in FIG. 3A. In particular, FIG. 3A and FIG. 3B show a case that a plurality of the operating systems are provided in parallel with each other (cf. FIG. 4A (a), FIG. 4B).

According to the present invention, a plurality of the modes can be implemented by a plurality of the operating systems, respectively. In particular, the operating system for supporting implementation can differ per mode.

Referring to FIG. 3A, a controller 180 can include a screen processor 185, a driver 186, a hypervisor 187 and a main processor 188. In this instance, the hypervisor 187 can be called such a terminology as a virtual engine (virtual machine), a virtualizing module (virtualization), a virtual engine monitor (virtual machine monitor), a virtualization module monitor (virtualization monitor) and the like. This terminology is just exemplary. In addition, a component capable of performing the same function of the hypervisor 187 is non-limited by the corresponding terminology.

A frame buffer is provided to each of a plurality of the operating systems stored in the memory 160. If a plurality of the operating systems are driven, the screen processor 185 receives a frame corresponding to a dedicated screen of the corresponding operating system from each of the frame buffers and then determines whether to display the dedicated screen of a prescribed one of the operating systems on a screen of the display unit 151 under the control of the main processor 188.

Under the control of the main processor 188, the screen processor 185 displays the dedicated screen of the specific operating system on the whole screen of the display unit 151 (e.g., in case of implementing one mode only). Alternatively, the screen processor 185 generates one integrated frame by combining and/or editing the frames received from the frame buffers can then display an integrated dedicated screen including all the dedicated screens of a plurality of the operating systems (e.g., in case of implementing a plurality of the modes).

Referring to FIG. 3A, a plurality of the operating systems OS1, ... OS N are prepared in parallel with each other, which can be described in detail with reference to FIG. 4A (a) and FIG. 4B as follows.

FIG. 4A (a) and FIG. 4B show a scheme of booting a plurality of operating systems Guest OS 1 and Guest OS 2 respectively supporting different modes in parallel by loading a hypervisor (hereinafter named a first scheme).

Referring to FIG. 4A (a) and FIG. 4B, the mobile terminal 100 can implement Guest OS 1 and Guest OS 2 selectively, sequentially or simultaneously. In addition, a different mode can be designated to each of the Guest OS 1 and the Guest OS 2. In this instance, the operation of the Guest OS 1 and the Guest OS 2 and the corresponding mode activation can be performed by the hypervisor. The components shown in FIG. 4B can perform general operations related to the virtualization engine technology.

Multi-OS booting and mode activation corresponding to the multi-OS booting are described in detail as follows. First of all, in case (1) of activating a mode corresponding to the currently booted Guest OS 1 or Guest Os 2 or in case (2) of booting the Guest OS 1 corresponding to first mode and the Guest OS 2 corresponding to a second mode sequentially or simultaneously, the controller 180 (particularly, the hypervisor) implements and activates either the first mode or the second mode (2-1) or can activate either the first or second mode despite implementing both of the first and second modes (2-2).

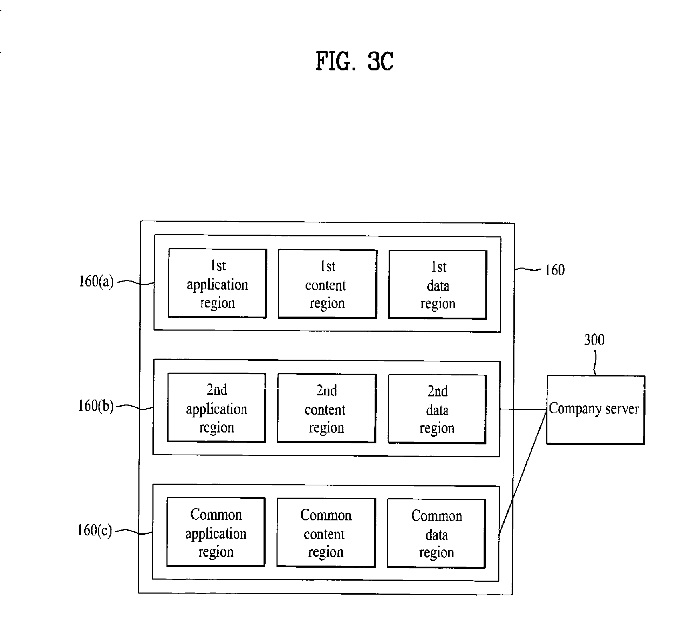

Referring now to FIG. 3, the screen processor 185, includes a layout manager 185a and a display driver 185b (FIG. 3B). Under the control of the main processor 188, the layout manager 185a generates one integrated frame by combing or editing the frames received from the frame buffers and the display driver 185b then controls the frame generated by the layout manager 185a to be displayed on the display unit 151.

The driver 186 controls the entire operating systems to be driven. The hypervisor 187 is a middleware between the main processor 188 and each of the operating systems and includes a virtualization engine configured to a plurality of the operating systems to be usable in the mobile terminal 100 according to the present invention. In addition, the main processor 188 controls all operations related to the driving of a plurality of the operating systems according to the present invention.

As mentioned in the above description, the screen processor 185, the driver 186, the hypervisor 187 and the main processor 188 can be included in the controller 180 or can be stored as software in the memory 160.

FIG. 3C is a block diagram of the memory 160 having a database storage region corresponding to each of a plurality of the modes.

According to the present invention, the mobile terminal can manage the database storage regions of a plurality of the modes discriminatively. In particular, When a plurality of the modes are implemented by the different operating systems, respectively, the mobile terminal can manage the database storage regions of a plurality of the modes discriminatively.

Generally, when at least one operating system capable of implementing a first mode and a second mode is provided, the memory 160 is ale to store an application corresponding to each of the at least one operating system. Therefore, the provided at least one or more operating systems can be booted selectively or simultaneously under the control of the controller 180.

For instance, the operating system can include such a commercial OS as Android OS, Linux based OS, Windows Mobile OS, Apple OS and the like. In addition, a dedicated application can be differently set for each of the operating systems. In addition, a multi-OS can include different kinds of operating systems (e.g., Android OS, Apple OS, etc.) and the same kinds of operating systems (e.g., 2.1 version of Android OS, 2.2 version of Android OS, etc.) differing from each other in version.

According to the present invention, assuming that both of the first mode and the second mode can be implemented, the memory 160 can include a first database storage region 160(a) corresponding to the first mode, a second database storage region 160(b) corresponding to the second mode, and a common database storage region 160(c) in common with the first mode and the second mode. Occasionally, the common database storage region 160(c) can be omitted. In this instance, a commonly-designated application and content or data associated with the corresponding application can be stored in the database storage region of the corresponding mode.

In particular, in configuring the first, second and common database storage regions, the mobile terminal 100 uses memories different from each other in hardware as the storage regions, puts restriction on accessing the storage regions per mode despite providing the storage regions within a same memory, or can discriminate the storage regions from each other using a storage partition per mode.

In this instance, the same operating system implements the first mode and the second mode or different operating systems can implement the first mode and the second mode, respectively. Moreover, at least two or modes can be implemented by the mobile terminal 100. If so, the database storage regions can be further subdivided.

In particular, the first database storage region 160(a) can include a region (i.e., a first application region) for storing at least one first application executable in the first mode, a region (i.e., a first content region) for storing a content associated with the first application and a region (i.e., a first data region) for storing data associated with the first application.

In addition, the second database storage region 160(b) can include a region (i.e., a second application region) for storing at least one second application executable in the second mode, a region (i.e., a second content region) for storing a content associated with the second application and a region (i.e., a second data region) for storing data associated with the second application.

Moreover, the common database storage region 160(c) can include a region (i.e., a common application region) for storing at least one common application executable in both of the first mode and the second mode, a region (i.e., a common content region) for storing a content associated with the common application and a region (i.e., a common data region) for storing data associated with the common application.

When the second mode is a business mode that facilitates a user's public life, information stored in the second database storage region 160(b) and information corresponding to the second mode in the common database storage region 160(c) can be utilized only if the corresponding information is stored in a manner of being shared with a company server 300, the corresponding information is stored in the company server 300 (i.e., the second database storage region 160(b) is unnecessary) or the company server 300 is accessed. In this instance, the company server 300 can include a server of a company, for which a user works, a server of a specific company designated by a user (or a company where the user works), or the like.

While the first mode is activated, the mobile terminal 100 can utilize the information stored in the first database storage region 160(a) and the information corresponding to the first mode in the common database storage region 160(c). While the second mode is activated, the mobile terminal 100 can utilize all the information stored in the first, second and common database storage regions 160(a), 160(b) and 160(c).

Alternatively, while the second mode is activated, the mobile terminal 100 can utilize the information stored in the first database storage region 160(a) and the information corresponding to the second mode in the common database storage region 160(c). While the first mode is activated, the mobile terminal 100 can utilize all the information stored in the first, second and common database storage regions 160(a), 160(b) and 160(c).

Optionally, it can control the mobile terminal 100 not to utilize the information on the first mode in the course of the activated second mode.

Besides, although the drawing shows that the application region, the content region and the data region are situated in the database storage region, the application region, the content region and the data region can be integrated together if necessary.

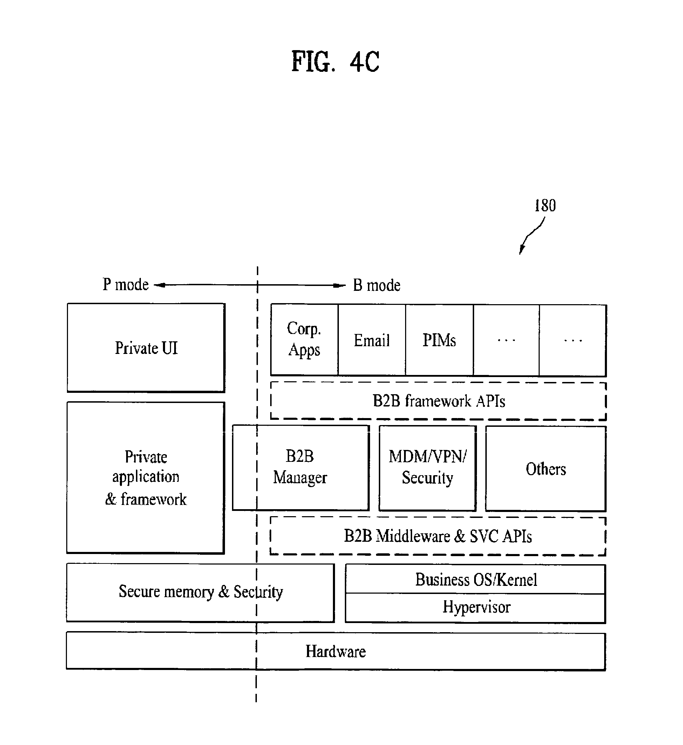

FIG. 4A (b) and FIG. 4C show a scheme of driving a hypervisor on a Host OS for supporting one mode to boot a Guest OS for supporting another mode (hereinafter named a second scheme). In particular, a mode supported by the Host OS can include a private mode. In addition, a mode supported by the Guest OS can include a business mode.

In more particular, referring to FIG. 4C, a B2B manager can perform a switching operation between a private mode (hereinafter abbreviated a P mode) and a business mode (hereinafter abbreviated a B mode). Components shown in a P mode region of the two regions partitioned by a dotted line can operate in case of the private mode implementation, components shown in the B mode region can operate in case of the business mode implementation, and components included in both of the modes can operate in both of the modes.

According to the present invention, the mobile terminal 100 can implement a plurality of modes on an operating system selectively, simultaneously or sequentially. A different operating system (hereinafter named an individual operating system) is designated to each of a plurality of the modes or a common operating system can be designated to a plurality of the modes. Specifically, implementation of a plurality of the modes can be controlled by the hypervisor 187.

In particular, a currently implemented or activated mode in accordance with an individual or common operating system is defined as follows. For clarity and convenience of the following description, assume that a plurality of modes include a first mode and a second mode. Of course, at least two or more modes can exist if necessary.

First of all, when a common operating system is booted, the controller 180 implements and activates either the first mode or the second mode (1) or can activate either the first mode or the second mode despite implementing both of the first and second modes.

When an individual operating system is booted, the controller implements and activates a mode corresponding to a currently booted individual operating system (1), implements and activates a mode corresponding to one of he first mode and the second mode in case of booting a first operating system corresponding to the first mode and a second operating system corresponding to the second mode sequentially or simultaneously (2-1), or activates either the first mode or the second mode despite implementing both of the first mode and the second mode (2-2).

In the following description, how to discriminate a plurality of modes from each other is explained in detail.

First of all, according to the present invention, each of a plurality of modes can be discriminated by at least one of a mode indicator, a database storage region, an operating system, a user access authority, an application configuration, a content configuration, a data configuration, an application feature, an application group, a group identifier and the like.

A case of discriminating a plurality of modes using a mode indictor according to a first embodiment is explained as follows.

First of all, each of a plurality of modes can have an indicator different to indicate a corresponding mode. An indicator per mode is basically stored in the mobile terminal 100 or can be downloaded from an external server or an external terminal. The indicator per mode is set or selected by a user or can be randomly set by the controller 180.

For instance, each of a plurality of the modes can have a different one of a mode icon, a mode image, a background image, a background color/brightness, a letter font/color/size, a home screen picture (number of pages and page indicator included), an application arrangement structure (e.g., the number of applications included in one home screen, etc.), an application identifier, an LED color, an alarm sound such as a bell sound and the like, a keypad type (backlight color of keypad included), a mode switching key zone, a group identifier (described later) and the like. Of course, those examples of the mode indicator are just exemplary and can include all display elements for discriminating a mode.

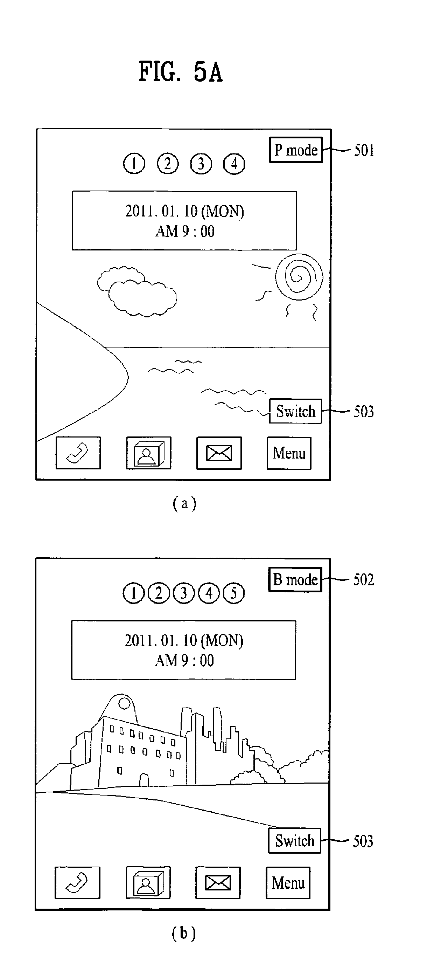

This is explained in detail with reference to FIGs. 5A to 5D. For clarity and convenience of the following description, assume that a first mode and a second mode include a private mode and a business mode, respectively. In addition, assume that either the private mode or the business mode is in an active state.

FIGs. 5A to 10C are diagrams for discriminating a plurality of modes according to the present invention.

Referring to FIG. 5A, if a personal mode is currently activated, the mobile terminal 100 can display an icon (P mode) 501 corresponding to the private mode on a prescribed region of a screen (FIG. 5A (a)). If a business mode is currently activated, the mobile terminal 100 can display an icon (B mode) 502 corresponding to the business mode on a prescribed region of a screen (FIG. 5A (b)).

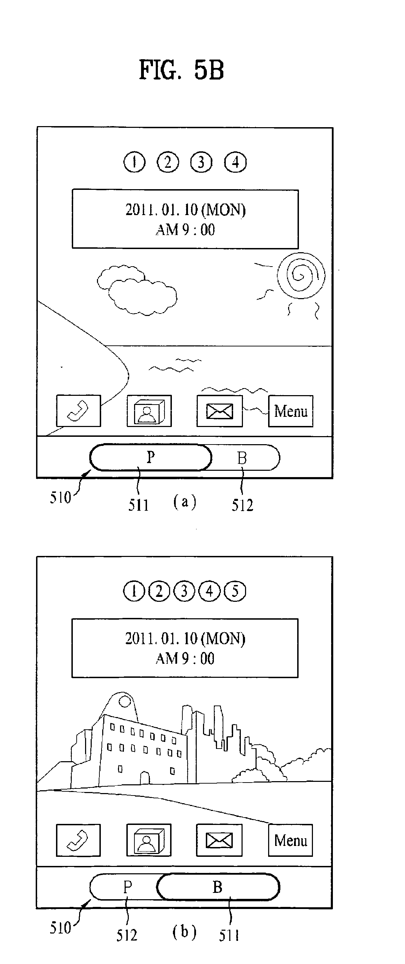

Referring to FIG. 5B, the mobile terminal 100 includes a mode switching key region 510 provided to a prescribed region of the screen. If the private mode is currently activated, the mobile terminal 100 can discriminatively display a zone (P) 511 corresponding to the private mode in the mode switching key region 510 (FIG. 5B (a)). If the business mode is currently activated, the mobile terminal 100 can discriminatively display a zone (B) 512 corresponding to the business mode in the mode switching key region 510 (FIG. 5B (b)).

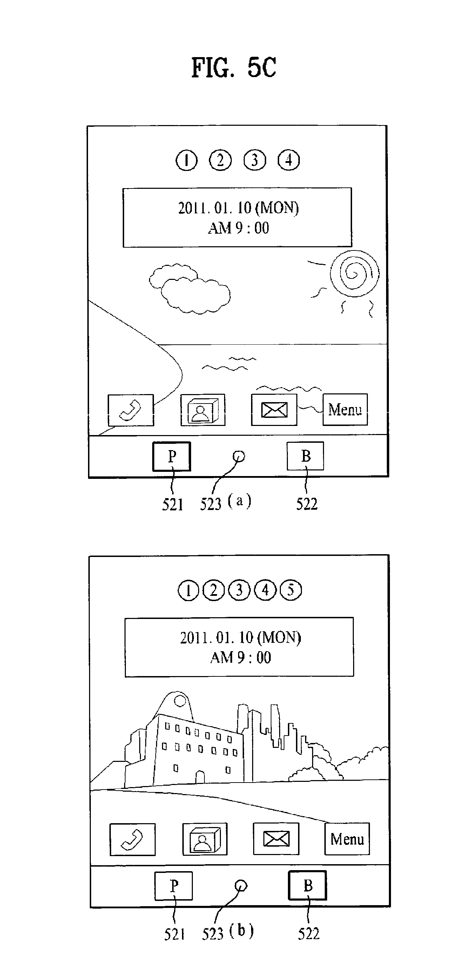

Referring to FIG. 5C, a private mode zone 521, a business mode zone 522 and a switching command zone 523 are provided to the screen of the mobile terminal 100. If the private mode is currently activated, the mobile terminal 100 can discriminatively display the private mode zone (P) 521 (FIG. 5C (a)). If the business mode is currently activated, the mobile terminal 100 can discriminatively display the business mode zone (B) 522 (FIG. 5C (b)).

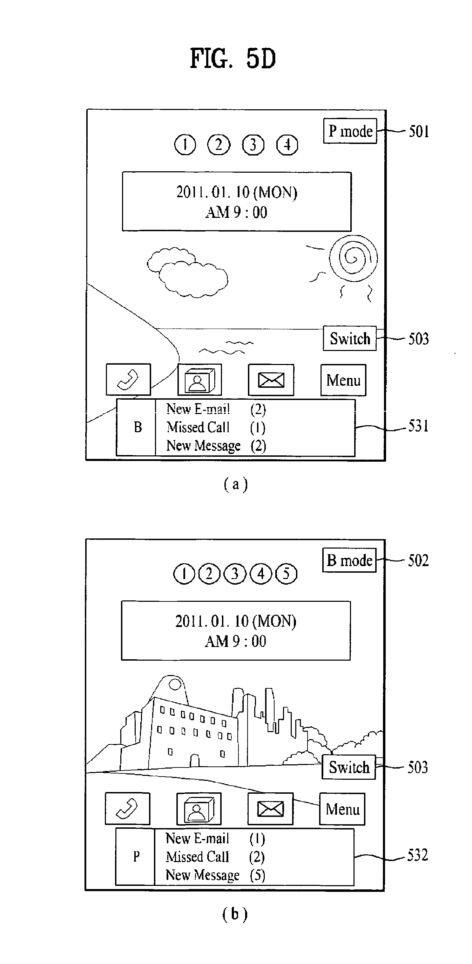

Referring to FIG. 5D, if the private mode is currently activated, the mobile terminal 100 can display an announcement window 531 for announcing events (e.g., email, message, call, etc.) occurring in association with the business mode or the number of the events (or, occurrence time, counterpart information, etc.) on a prescribed region of the screen (FIG. 5D (a)). If the business mode is currently activated, the mobile terminal 100 can display an announcement window 532 for announcing events (e.g., email, message, call, etc.) occurring in association with the private mode or the number of the events (or, occurrence time, counterpart information, etc.) on a prescribed region of the screen (FIG. 5D (b)).

In the following description, a case of discriminating a plurality of modes using a database storage region according to a second embodiment is explained.

First of all, a plurality of the modes can discriminatively have database storage regions within the memory 160, respectively (cf. FIG. 3C).

Each of a plurality of the modes can utilize the information stored in the corresponding database storage region or the corresponding information stored in the common database storage region only. Moreover, it can set the information on one mode not to be utilized in other modes. Besides, one (e.g., business mode) of a plurality of the modes can utilize information on another mode (e.g., private mode), whereas the latter mode can be set not to use the information on the former mode.

If the information on the first mode can be utilized in the second mode (yet, the first mode is unable to utilize the information on the second mode), it can be said that an access restriction is put on the second mode or that a higher security level is set on the second mode (described later).

This is explained in detail with reference to FIGs. A to 7B as follows. For clarity and convenience of the following description, assume that a first mode and a second mode include a private mode and a business mode, respectively. Assume that either the private mode or the business mode is in an active state. In addition, assume that a common application of the first and second modes is currently executed.

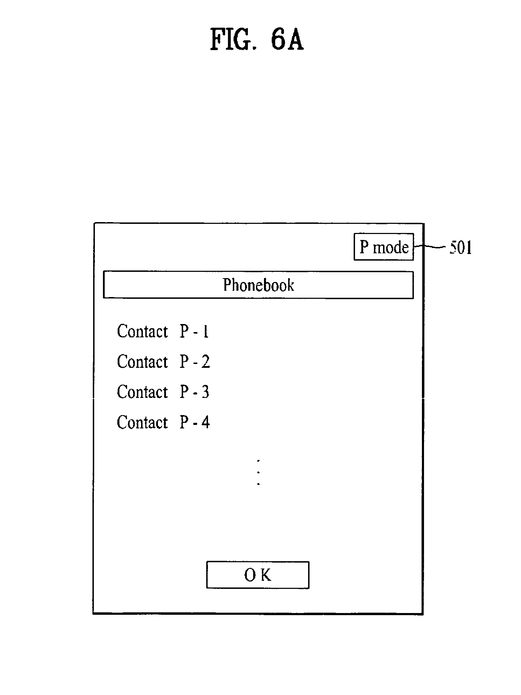

Referring to FIG. 6A, when a phonebook (example of a common application) is being executed in the private mode, the mobile terminal 100 extracts contact information corresponding to the private mode from contact information associated with the phonebook only can then display the extracted contact information.

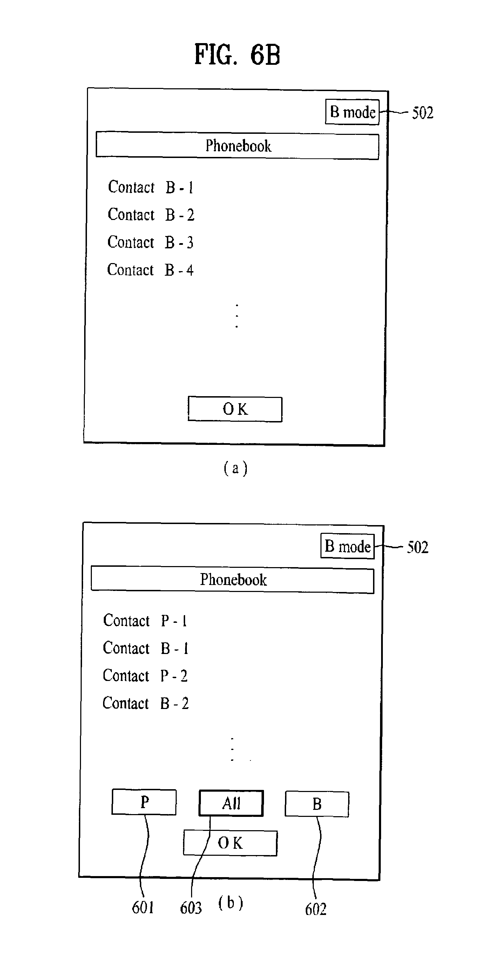

Referring to FIG. 6B, in case of executing a phonebook in the private mode, the mobile terminal 100 extracts contact information corresponding to the business mode from contact information associated with the phonebook and then displays the extracted contact information (FIG. 6B (a)). Alternatively, the mobile terminal 100 extracts contact information corresponding to either the private mode or the business mode can then display the extracted contact information (FIG. 6B (b)).

In particular, FIG. 6B (b) shows a case that a zone (All) 603 is activated. If a privacy zone (P) 601 is activated, the mobile terminal 100 can selectively display the counterpart information corresponding to the private mode only. If a business zone (B) 602 is activated, the mobile terminal 100 can selectively display the counterpart information corresponding to the business mode only.

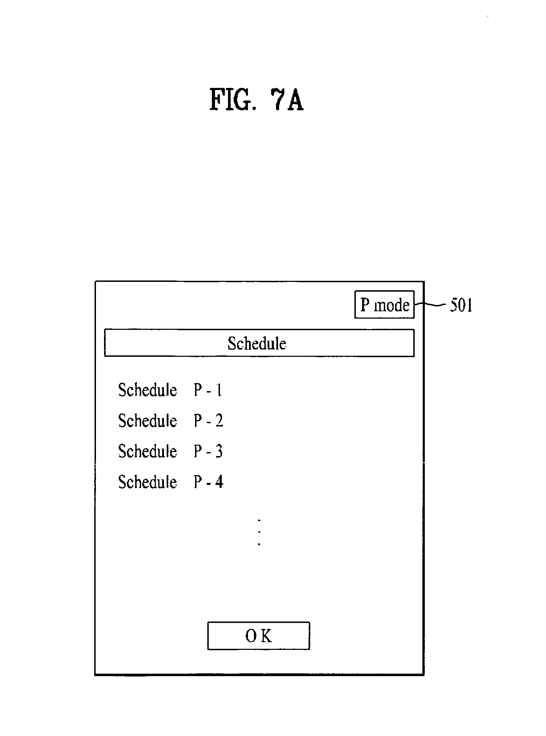

Referring to FIG. 7A, when a schedule management (example of a common application) is being executed in the private mode, the mobile terminal 100 extracts schedules corresponding to the private mode from schedules associated with the schedule management only can then display the extracted schedules.

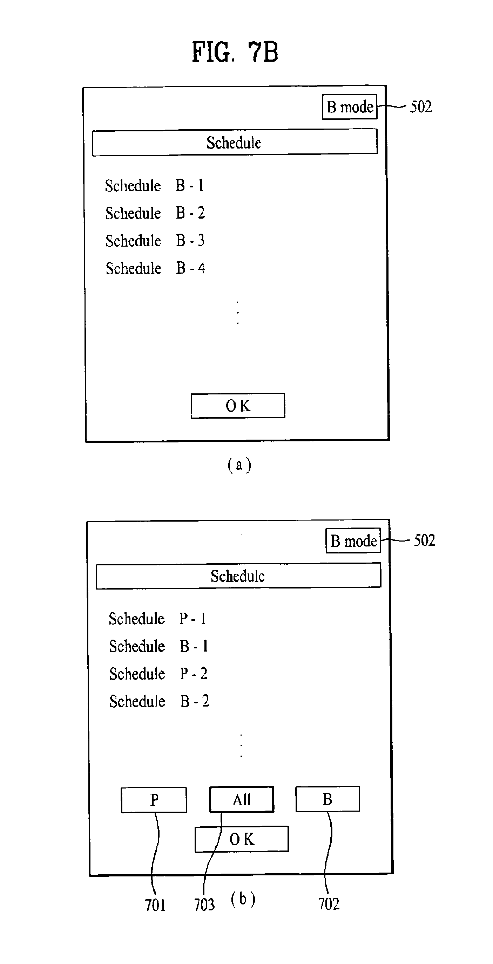

Referring to FIG. 7B, in case of executing a schedule management in the private mode, the mobile terminal 100 extracts schedules corresponding to the business mode from schedules associated with the schedule management and then displays the extracted schedules (FIG. 7B (a)). Alternatively, the mobile terminal 100 extracts schedules corresponding to either the private mode or the business mode can then display the extracted schedules (FIG. 7B (b)).

In particular, FIG. 7B (b) shows a case that a zone (All) 703 is activated. If a privacy zone (P) 701 is activated, the mobile terminal 100 can selectively display the schedules corresponding to the private mode only. If a business zone (B) 702 is activated, the mobile terminal 100 can selectively display the schedules corresponding to the business mode only.

Specifically, referring to FIGs. 6A to 7B, although the private mode is unable to access the information on the business mode or the database storage region storing the information on the business mode, the business mode can freely access the information on the private mode or the database storage region storing the information on the private mode.

According to a third embodiment, each of a plurality of modes can be discriminated by a corresponding user access authority. For clarity and convenience of the following description, assume that a plurality of the modes include a first mode and a second mode.

Regarding each of a plurality of the modes, as a different security level is set, a user access authority can be changed (1). Regarding each of a plurality of the modes, if an access restriction is put on one mode but an access restriction is not put on the other mode, a user access authority can be changed (2).

For this, in order to enter a specific one of a plurality of the modes, an authentication procedure can be requested. Hence, the specific mode can be entered only if a valid authentication procedure is performed to enter the specific mode. In particular, if an access restriction or a security level over a predetermined reference is put on the specific mode, an authentication procedure can be requested.

For instance, in a mode having a high user access authority, information corresponding to a mode having a low user access authority or a database storage region of the corresponding information is freely accessed and can be freely utilized. On the contrary, in a mode having a low user access authority, it is unable to access information corresponding to a mode having a high user access authority or a database storage region of the corresponding information.

In case of entering or switching to a mode having a high user access authority, an input of a user authentication information is requested. If a valid user authentication information is input, the mobile terminal 100 can enter or switch to the mode having the high user access authority (example of an authentication procedure). In case of a mode having a low security level, the mobile terminal 100 is requested to input a user authentication information (e.g., name, social security number, etc.) of a low level. In case of a mode having a high security level, the mobile terminal 100 is requested to input a user authentication information (e.g., name, social security number, specific touch pattern, specific password, etc.) of a high level.

Regarding management (e.g., input, inquiry, editing, etc.) of information (e.g., content, data, etc.) on an application in accordance with a user access authority, three kinds of cases are described in detail as follows. For clarity and convenience of the following description, assume that a plurality of modes include a first mode and a second mode.

First of all, according to a first case, there can exist applications to which contents or data can be input regardless of a mode. For instance, the content or data inputtable application can include such an application for performing a basic function in using a terminal as a schedule management, a scheduler, an email, a message, a messenger, a conference call, a video call, an internet, a phonebook and the like.

According to a second case, like the first case, an information input is possible without mode discrimination. Yet, it can discriminate a database storage region per mode (cf. FIG. 3C).

In particular, inter-mode information exchange is impossible but unilateral information exchange is possible. For instance, an information transfer from a private mode to a business mode is possible but an information transfer from a business mode to a private mode is impossible. For another instance, by setting a plurality of modes to different security levels, respectively, an information transfer from a low level to a high level is possible but an information transfer from a high level to a low level is impossible.

In case of a specific situation, an external terminal having a predetermined authority in a remote place deletes information (e.g., application, content, data, etc.) on a specific mode only or can shut down the specific mode itself. For instance, the specific situation can include one of a case that an employee takes out a terminal without authorization, a case that a terminal is stolen, a case that a unregistered storage medium is loaded in a terminal, a case that a terminal accesses an unsubscribed network, and the like.

Furthermore, regarding a user access authority, it can differentiate an authority for accessing an application, a content, a data or the like, which is available for a business mode, in accordance with a user level (e.g., the user level is determined in consideration of rank in company, duty attribute in company, department in company, etc.) of the mobile terminal 100. In addition, it is also able to differentiate a function for a specific application. For instance, when a user level (e.g., a group head) is equal to or higher than a predetermined reference, an approval grant function is usable. Yet, when a user level (e.g., a company employee) is lower than a predetermined reference, an approval grant function is deactivated. Moreover, the same application can have a usable content/data that differs in accordance with a user level or the same content/data can have a different range of the provided information in accordance with a user level (e.g., a different data field can be configured in accordance with a user level). Besides, in accordance with a user's authority, an icon associated with a job failing to belong to the corresponding authority is not displayed on a terminal itself. Even if the icon is displayed on the terminal, it can be set not to be executed.

According to a third case, there can exist application (e.g., dedicated applications) accessible to corresponding information as well as operable in either a first mode or a second mode.

For instance, for security matters in a business mode, a photographing function is restricted, a conditional access to a network is granted, or a print function is blocked. In case of the business mode, a business related application is provided. In case of a private mode, the business related application may not be provided. Of course, for the private mode, a privacy related application is provided. In case of the business mode, the privacy related application may not be provided.

Meanwhile, there can exist a content or application specialized in a unilateral mode only. For instance, the application specialized for the business mode can include a company business related application. In addition, the company business related application can perform a function of an upload to a company server, a function of a download to the company server and the like.

In addition, it can put an access restriction (or entry) per mode in accordance with a place or time. For instance, it can set a business mode not to be entered at home. For another instance, it can set a private mode not to be entered on a specific time zone. Occasionally, a separately authorized person can enter the business mode at home or the private mode at office on a specific time zone.

Moreover, since an interface is provided to be shared with users in the business mode, information can be shared with the users. If the business mode is switched to the private mode, the interface provided for the information sharing can be shut down.

Furthermore, there can exist one hardware module (e.g., a common module) usable for a plurality of modes in common or another hardware module (e.g., a dedicated module) usable for a specific one of a plurality of the modes. Hence, if a first mode is currently activated, a common module and a dedicated mode of the first mode are activated, while a dedicated module of a second module is not activated. In this instance, the common module and the dedicated module are designated in accordance with a user selection or can be designated by a decision made by the controller 180 or the company server 300.

For instance, assuming that a first mode and a second mode are a private mode and a business mode, respectively, a common module can include one of a mobile communication module 112 for call and message transmission and reception, a power supply unit 190, a display unit 151, a memory 160 and the like. A dedicated module of the private mode can include one of a camera 121, a position location module 115 and the like. In addition, a dedicated module of the business mode can include a projector module 155 or the like. The above examples of the communication any the dedicated module are just exemplary, by which the communication module and the dedicated module are non-limited. In addition, the communication module and the dedicated module can be configured in more various ways.

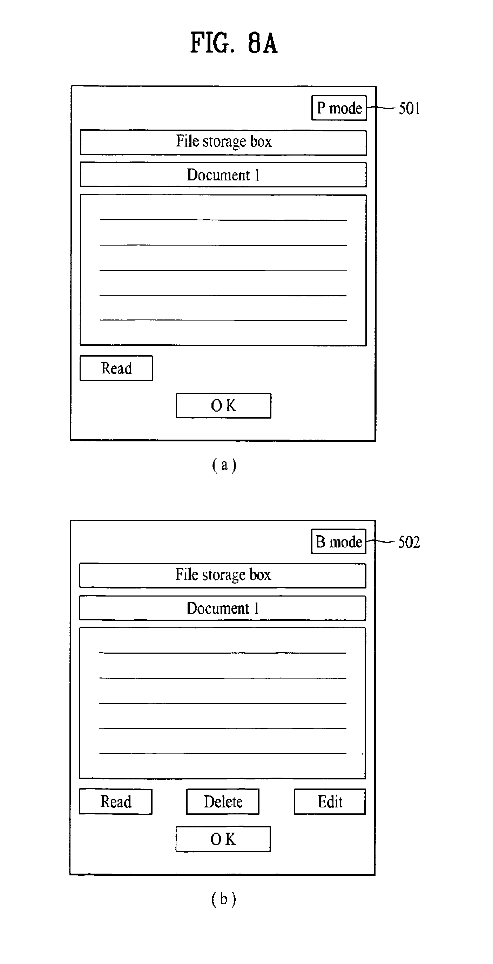

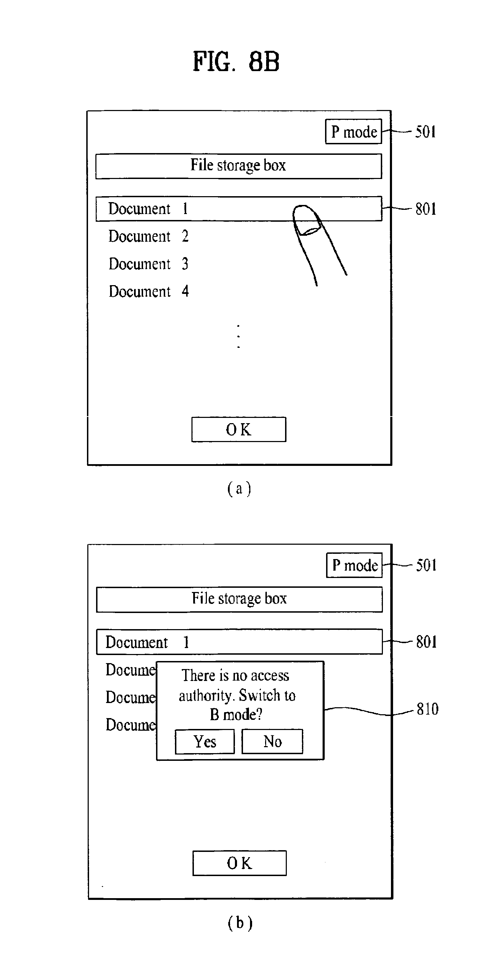

In the following description, a user access authority is explained in detail with reference to FIG. 8A and FIG. 8B. For clarity and convenience of the following description, assume a case that the same content is accessed.

Referring to FIG. 8A, when a document 1 (example of content) is accessed in a private mode, the mobile terminal 100 can grant 'read authority' for the document 1 (FIG. 8A (a)). When a document 1 is accessed in a business, the mobile terminal 100 can grant 'read authority, delete authority, edit authority' for the document 1 (FIG. 8A (b)). Moreover, if a user is authorized over a predetermined level in a company, an approval authority can be granted to the user for the document 1 that requires approval or authorization.

Referring to FIG. 8B, when a file 1 (example of content) corresponding to a business mode is selected from a file list in a private mode (FIG. 8B (a)), the mobile terminal 100 informs a user that there is no access authority on the file 1 and enables the user to select whether to switch the private mode to the business mode to check the file 1 (FIG. 8B (b)).

Of course, for the private mode in FIG. 8B, a file corresponding to the business mode may not be included in the file list. In addition, it can display an indictor, which indicates that the file corresponds to the privacy/business mode, on the file list.

Although the user access authority is set per mode in the above description, it can be set per application, content or data if necessary. Therefore, a user authorized with the user access authority can check the same content, whereas an unauthorized user is unable to check the same content.

According to a fourth embodiment, each of a plurality of modes can be discriminated in accordance with at least one of an application configuration, a content configuration and a data configuration.

Each of a plurality of the modes can configure an application different per mode. Even if an application is a common application, each of a plurality of the modes can configure a content or data corresponding to the application differently.

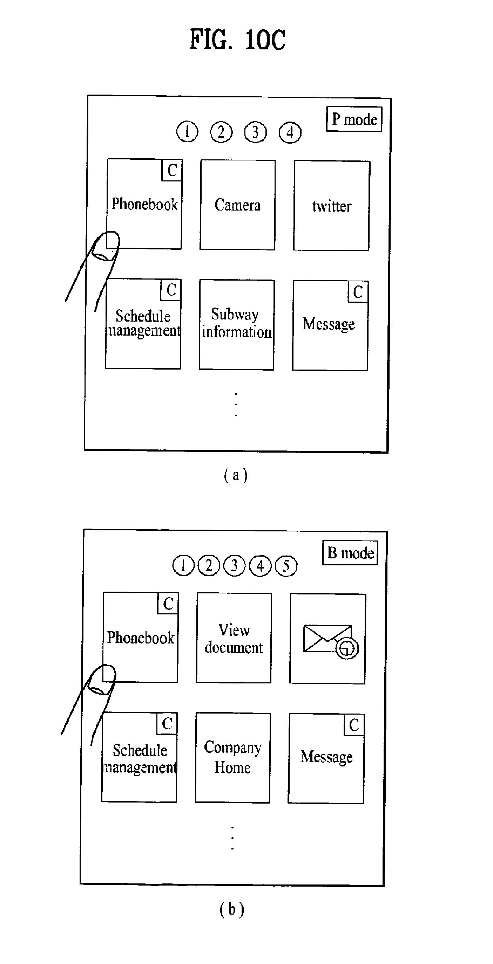

In this instance, if the configuration of the application is different, it means that at least one application (hereinafter named a first dedicated application) dedicated to a first mode and at least one application (hereinafter named a common application) in common with the first mode and a second mode are executed in the first mode or it can mean that at least one application (hereinafter named a second dedicated application) dedicated to the second mode and at least one application (hereinafter named a common application) in common with the first mode and the second mode are executed in the second mode (cf. FIG. 10C).

If the configuration of the content/data is different, it can include both a case that a substance of the content/data is different and a case that a substance of the content/data is different in part. Specifically, the latter case can mean that a substance of a specific content corresponding to each of the first mode and the second mode is different even if the specific content is designated to both of the first mode and the second mode. This is enabled in a manner of configuring a data field different per mode for the same content or data.

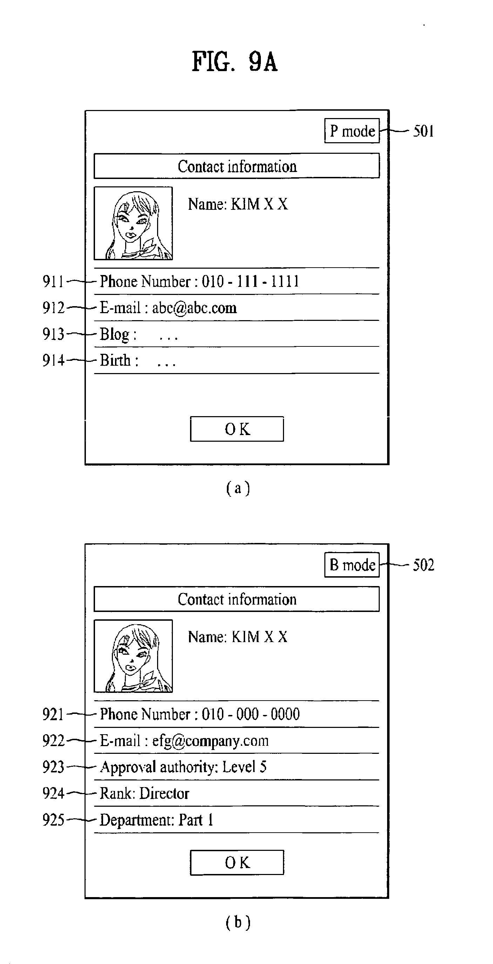

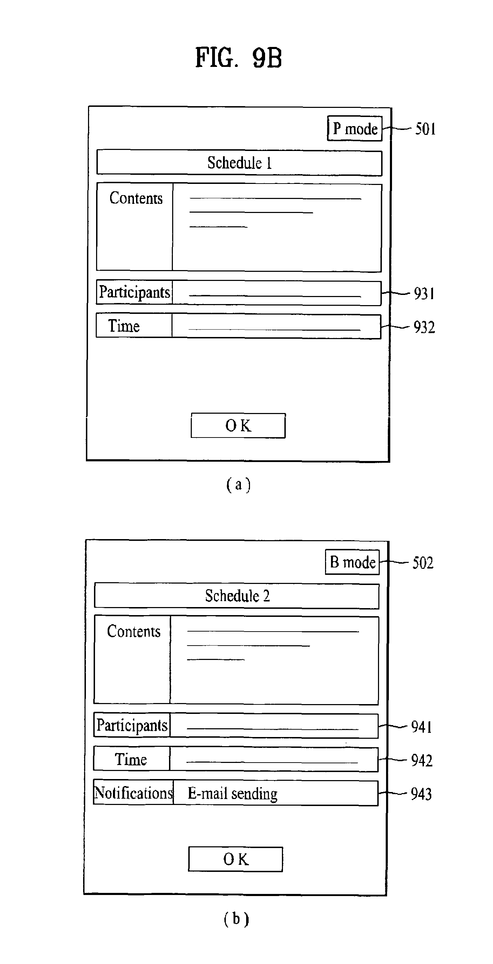

This is explained in detail with reference to FIG. 9A and Fig. 9B as follows.

Referring to FIG. 9A, in storing the same contact information, the mobile terminal 100 designates different phone numbers 911 and 921 and different emails 912 and 922 to a private mode and a business mode, respectively, further designates a blog address 913 and a birthday information 914 to the private mode, and further designates an approval authority 923, a rank 924 and a department 925 to the private mode.

Referring to FIG. 9B, in storing the same schedule, even if a content and participant information 931 and a content and participant information 941 are identically designated to a private mode and a business mode, respectively, the mobile terminal 100 can further designate a time information 932 to the private mode and is also able to further designate a conference room information 942 and a notification 943 to the business mode.

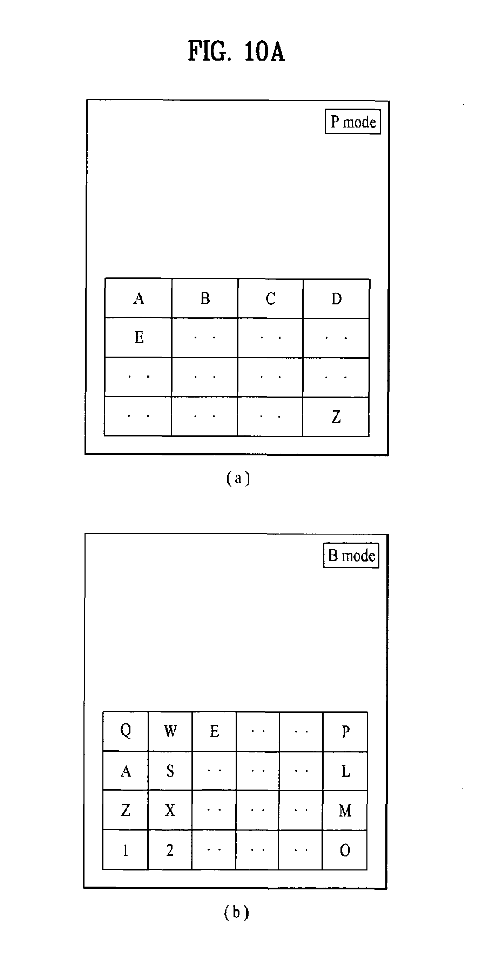

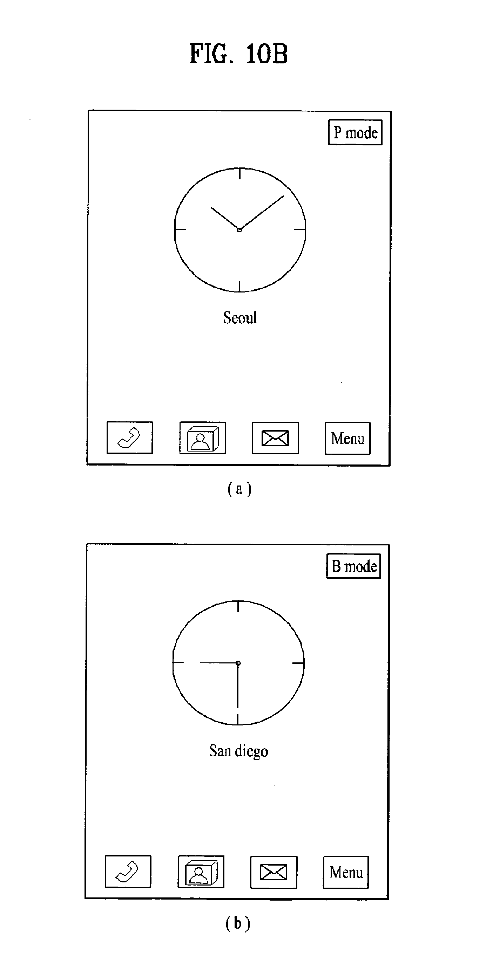

The mobile terminal 100 can set a keypad type different per mode (FIG. 10A) or can set a time zone different per mode (FIG. 10B). The mobile terminal 100 can set a different application and a different backup !eve! of information associated with the application per mode. For instance, the mobile terminal 100 backs up information of a recent week in the private mode and is also able to back up information of a recent month or real-time information in the business mode. Of course, the backup level per mode is set by a user or can be randomly set by the controller 180.

In particular, in the business mode, if a counterpart terminal is not in the business mode or a working hour (or a holiday) currently in consideration of a status (e.g., a currently activated mode, a current location, a time zone, etc.) of the counterpart terminal, with which the mobile terminal 100 currently attempts to contact, the mobile terminal 100 informs a user of the unavailability of the counterpart terminal to enable the user to select whether to make a contact. In doing so, the mobile terminal 100 can receive information indicating the status of the counterpart terminal from the counterpart terminal or a company server can then obtain the status of the counterpart terminal using the received information.

In the business mode, it can modify all previously-stored schedules to be fitted to a currently belonging time zone by reflecting a current time zone (for a case that a time zone is changed).

When there is no user input action made for a predetermined period of time in the business mode, it can lock or shut down the business mode automatically or in accordance with a user selection. In this instance, in order to unlock the locked state or cancel the shutdown, a user authentication information corresponding to the business mode is input or an authentication should be granted by the company server. Moreover, in the business mode, when an overseas roaming function is loaded on a user terminal, if a current location of a user is domestic, the overseas roaming function is automatically deactivated. If a current location of a user is overseas, the overseas roaming function can be automatically activated.

According to a fifth embodiment, when at least one common application is executed, each of a plurality of modes can vary its feature to correspond to a currently activated mode. In other words, when a specific application is a common application of a first mode and a second mode, the feature of the specific application can vary in accordance with whether the currently activated mode is the first mode or the second mode.

In this instance, if a feature varies per mode, it can mean that a configuration (e.g., a corresponding content/data configuration included), display or security of an application is varied.

For instance, if a feature varies per mode, it can mean that a structure (e.g., configuration of a corresponding menu item) of an application, an executed screen (e.g., background image, letter type, letter size, provided information, etc.) of an application, a configuration of content/data associated with an application (cf. FIG. 9A, FIG. 9B), an application function, a security of an application (or, content, data, etc.) or the like is different per mode. Of course, as the examples of the application features are just exemplary, any case of configuring a common application to be different per mode is applicable to the present embodiment.

For instance, when the application function is different, a photographing function is allowed to a camera in a private mode but may not be allowed in a business mode. For another instance, when an authority of access to an application is different, a phonebook provides a name, a phone number and a personal email address in a private mode and can further provide a company email address, a rank, a department and an approval authority information in a business mode.

This is explained in detail with reference to FIG. 10C as follows. For clarity and convenience of the following description, assume that a plurality of modes include a private mode and a business mode.

Referring to FIG. 10C, the mobile terminal 100 can receive an input of an execution command signal for executing a phonebook (i.e., an example of a common application) from a user.

The mobile terminal 100 determines a mode activated at the input timing point of the execution command signal. If a private mode is currently activated, the mobile terminal 100 executes the phonebook in accordance with a feature corresponding to the private mode and then displays an executed screen of the phonebook (cf. FIG. 6A or FIG. 9A (a)). On the contrary, if a business mode is activated, the mobile terminal 100 executes the phonebook in accordance with a feature corresponding to the business mode and then displays an executed screen of the phonebook (cf. FIG. 6B or FIG. 9A (b)).

For instance, a case that a security of an application is different is explained as follows. First of all, in case of attempting to execute a common application in a first mode, an authentication procedure is not requested or a low-level security set authentication information needs to be input. Yet, in case of attempting to execute a common application in a second mode, an authentication procedure is requested or a high-level security set authentication information should be input. In doing so, the application execution can include an output of content or data associated with the application as well as an executed screen display of the application.

According to a sixth embodiment, a plurality of modes can be discriminated from each other using user information corresponding to the modes, respectively. In this instance, the user information can include a user name (or title), a user image, a user phone number, a user email address, a user blog address and the like.

For instance, first and second user information different from each other can be set for first and second modes, respectively. In particular, when a first phone number and a second phone number (e.g., dual SIM) are assigned to the mobile terminal 100, the first phone number and the second phone number can be set for the first mode and the second mode, respectively.

In the above description, the definitions of the modes mentioned in the disclosure are explained. In addition, when a plurality of modes exist, the method of discriminating a plurality of the modes is explained as well.

According to a seventh embodiment, each of a plurality of modes can be discriminated by an application group including at least one application executed in the corresponding mode.

For instance, when at least one application is executable in each of a plurality of modes, the controller 180 can configure an application group including executable application(s) per mode. Moreover, the application group can be configured in accordance with an application type as well as the corresponding mode. For example, if an application type is a call, call related applications are included in the corresponding application group. If an application type is a camera, camera related applications can be included in the corresponding application group.

Moreover, the mobile terminal 100 displays a per-mode group identifier corresponding to a per-mode application group on the screen. If a specific group identifier is selected, the mobile terminal 100 can display indicators of applications belonging to the corresponding application group or can switch a current mode to a mode corresponding to the specific group identifier (assuming that it is not a currently activated mode).

In the following description, a mode controlling method in a mobile terminal, which performs a mode switching operation or a screen switching operation (maintaining an active mode) to correspond to an input pattern of a switching command, is described with reference to the accompanying drawings.

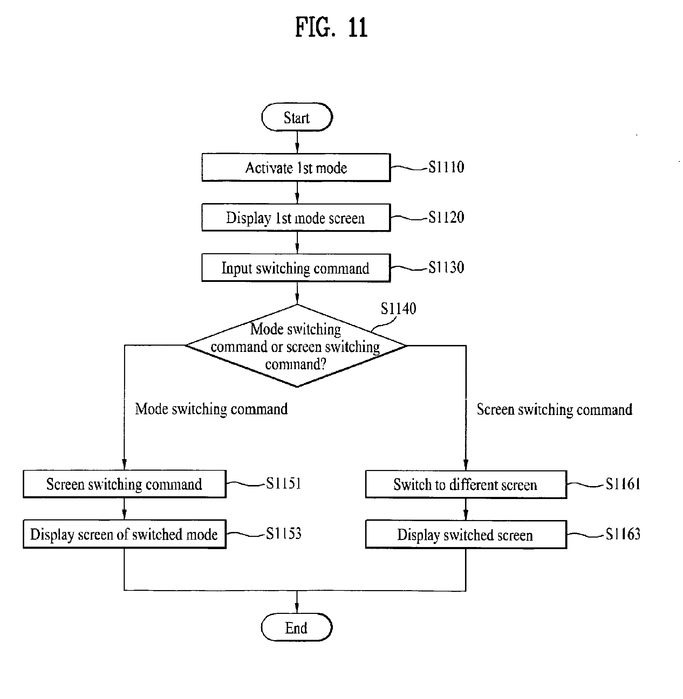

FIG. 11 is a flowchart of a mode controlling method in a mobile terminal according to one embodiment of the present invention. For clarity and convenience of the following description, a plurality of modes are limited to a 1st mode and a 2^{nd} mode. An application executable in both of the 1^{st} mode and the 2^{nd} mode shall be named a common application. In addition, an application executable in either the 1^{st} mode or the 2^{nd} mode shall be named a dedicated application.

Referring to FIG. 11, while a 1st mode and a 2^{nd} mode are implemented, the mobile terminal 100 activates the 1^{st} mode under the control of the controller 180 (S1110).

In doing so, if an operating system is designated per mode, the controller 180 can implement the 1^{st} mode and the 2^{nd} mode using a first individual operating system and a second individual operating system (i.e., a first OS and a second OS in multi-OS) corresponding to the 1^{st} mode and the 2^{nd} mode, respectively. If an operating system per mode is common, the controller 180 can implement the 1^{st} mode and the 2^{nd} mode using a common operating system (i.e., a single OS).

In the 1^{st} mode activating step S1110, the mobile terminal 100 can execute a common application or a dedicated application in accordance with a feature corresponding to the 1^{st} mode. For instance, when the 1^{st} mode and the application are a private mode and a phonebook, respectively, the mobile terminal 100 can display a Contact information list including Contact information associated with the private mode or a specific Contact information including a data field corresponding to the private mode.

In the following description, a mode implemented in case of OS booting per multi-Os type (cf. FIGs. 4A to 4C) is explained. For instance, multi-OS types can include a first multi-OS type (e.g., Guest OS 1 and Guest OS 2 included: This type corresponds to a first scheme) and a second multi-OS type (e.g., Host OS and Guest OS: This type corresponds to a second scheme.). Assume that Guest OS 1 and Host OS correspond to a private mode. In addition, assume that Guest OS 2 and Guest OS correspond to a business mode.

First of all, according to the first multi-OS type, if the hypervisor included in the controller 180 is driven, the mobile terminal 100 can boot Guest OS 1 and Guest OS 2 simultaneously or sequentially. If a specific one of a private mode and a business mode is selected by a user or the controller 180, the mobile terminal 100 activates the specific mode on the Guest OS corresponding to the selected specific mode can then execute a corresponding application in the activated specific mode. Meanwhile, when the specific mode selecting step is omitted, the mobile terminal 10 can activate the private mode using the Guest OS 1 designated as default.

According to the second multi-OS type, the mobile terminal 100 preferentially boots the Host OS corresponding to the private mode can then preload the Guest OS corresponding to the business mode, under the control of the controller 180. The mobile terminal 100 activates the private mode on the Host OS can then execute the application in the private mode.

Moreover, when the Guest OS preloaded by the hypervisor is booted, the mobile terminal 100 activates the business mode on the Guest OS can then execute the corresponding application in the business mode. Meanwhile, in case of post-loading the Guest OS, if the hypervisor is driven to load the Guest OS, the mobile terminal 100 can post-load the Guest OS.

In doing so, when preloading the Guest OS, an initial OS booting takes a considerable time. Yet, since two operating systems are already booted after completion of the booting, a mode switching can be quickly performed. In case of post-loading the Guest OS, an initial OS booting is quickly performed. Yet, when switching a current mode to a mode corresponding to the Guest OS, it may take a considerable time for a mode switching due to the time consumption attributed to the Guest OS booting.

The Guest Os loading process is described in detail as follows. First of all, the mobile terminal 100 downloads an application corresponding to the Guest OS from a server for managing and providing applications, executes the downloaded application, can then load the Guest OS. Subsequently, as the loaded Guest OS is booted, the mobile terminal 100 can activate the business mode corresponding to the Guest OS.

Referring now to FIG. 11, in the activating step S1110, the mobile terminal 100 can activate either the 1^{st} mode or the 2^{nd} mode in accordance with a user selection or a prescribed reference in case of an operating system booting, under the control of the controller 180. The activation of the 1^{st} mode described in the activating step S1110 is just one example of the selective activation and does not mean that the 1^{st} mode is preferentially activated.

For instance, in case of the single OS, any one of the 1^{st} and 2^{nd} modes can be activated in accordance with the single OS booting. For another instance, in case of the multi-OS, a mode selected by a user from the 1^{st} mode and the 2^{nd} mode or a firstly OS-booting completed one of the 1^{st} mode and the 2^{nd} mode is activated in accordance with the booting of the multi-OS. In particular, in case of the sequential booting of the multi-OS, the mobile terminal 100 can preferentially boot the OS, which meets a prescribed condition, under the control of the controller 180. For instance, the controller 180 can preferentially boot the OS that meets one of the conditions such as an OS having a preferential booting order, an OS designated by a user to be preferentially booted and an OS supporting a mode corresponding to a current terminal status.

Under the control of the controller 180, if the 1^{st} mode is activated, the mobile terminal 100 displays a screen (hereinafter named a 1^{st} mode screen) of the 1^{st} mode using the display unit 151 (S1120).

In this instance, the 1^{st} mode screen can include at least one of an executed screen of an application executed in the 1^{st} mode, a screen (e.g., a home screen, etc.) containing indicators of applications executable in the 1^{st} mode, a screen containing a widget executed in the 1^{st} mode, a configuration setting screen for setting an execution configuration of the 1^{st} mode and the like, by which the present invention is non-limited. In addition, any screen displayed in a 1^{st} mode activated state can be called a 1^{st} mode screen.

Specifically, when the 1^{st} mode screen includes a plurality of pages, the 1^{st} mode screen displayed in the displaying step S1120 can include a specific one of a plurality of the pages.

The mobile terminal 100 externally receives an input of a switching command via the user input unit 130 (S1130). In this instance, the switching command can include a mode switching command for a mode switching from the currently activated 1^{st} mode to the 2^{nd} mode or a screen switching command for a screen switching from a currently displayed page to another page among a plurality of the pages of the currently activated 1^{st} mode.

For instance, the switching command can be variously input in such a manner as a touch action corresponding to a switching command, a selection of a menu item corresponding to a switching command, a selection of a key or a key zone for receiving an input of a switching command, a terminal motion (e.g., shaking, inclining in a predetermined direction, etc.) corresponding to a switching command, a speech input corresponding to a switching command and the like. Of course, the above enumerated examples are just examples of the switching command inputting means, by which a means for inputting a switching command is non-limited.

In the inputting step S1130, the mobile terminal 100 receives an input of a switching command having an input pattern corresponding to a mode switching command or an input of a switching command having an input pattern corresponding to a screen switching command. Namely, the input pattern of the mode switching command can differ from that of the screen switching command.

For instance, in the inputting step S1130, if the mobile terminal 100 is provided with a touchscreen, the mobile terminal 100 can receive an input of a touch action corresponding to a mode switching command or a screen switching command as a switching command. In this instance, the touch action of the mode switching command or the touch action of the screen switching command can differ from each other n a touch pattern (e.g., a touch direction, the number of pointers, etc.).

In the inputting step S1130, when a mode switching command is input, if a plurality of switchable modes exist, the mobile terminal 100 can select a mode to switch by differentiating an input pattern of the mode switching command. When a screen switching command is input, if a plurality of switchable pages exist, the mobile terminal 100 can select a page to switch by differentiating an input pattern of the screen switching command. This is attributed to the following reasons. First of all, the mode switching command has input patterns differing from each other for the switchable modes, respectively. Secondly, the screen switching command has input patterns differing from each other for the switchable pages, respectively.

In the inputting step S1130, the mobile terminal can receive an input of a mode switching command in a basic screen displayed state. Hence, if the basic screen displayed state is not currently entered, the mobile terminal 100 enters the basic screen displayed state can then receive the input of the mode switching command. In this instance, the basic screen can include at least one of a screen of displaying an indicator of an application or function executable in common in a plurality of modes (e.g., a currently activated mode, a switchable mode, etc.), a screen containing an indicator of a user-favorite application, a screen of displaying an indicator of an application randomly designated by a terminal or user, and a home screen (or a standby screen) of a currently activated 1^{st} mode. For instance, the function executable in common can include one of a phone function, a message function, a configuration setting function and the like. Of course, the above enumerated screens are just examples of the basic screen, by which the configuration of the basic screen is non-limited.

For instance, no matter what page is displayed, the mobile terminal 100 can be provided with a key zone or a key (or a button) for receiving an input of a basic screen display command. Hence, if a user selects a key zone or a key for receiving an input of a basic screen display command, a basic screen displayed state can be entered.

Under the control of the controller 180, the mobile terminal 100 determines whether the switching command input in the inputting step S1130 is a mode switching command or a screen switching command (S1140).

In particular, the controller 180 can determine whether the input switching command is the mode switching command or the screen switching command using an input pattern of the input switching command. This is possible because the mode switching command and the screen switching command differ from each other in the input pattern. The input pattern of the mode switching command and the input pattern of the screen switching command are designated by a user or the controller 180 or can be designated as a default in the mobile terminal 100.

The mobile terminal 100 can display an information (e.g., a text, an icon, an image, etc.), which indicates whether the input switching command is the mode switching command or the screen switching command, on a prescribed region of the screen. This is to enable a user to recognize whether a currently input switching command is a mode switching command or a screen switching command.

For instance, if a touch & drag action or a flicking action is input in a vertical direction (or a right direction), the controller 180 determines the input action corresponds to a mode switching command. For another instance, if a touch & drag action or a flicking action is input in a horizontal direction (or a left direction), the controller 180 determines the input action corresponds to a screen switching command. If a touch & drag action or a flicking action by a plurality of pointers is input, the controller 180 determines the input action corresponds to a mode switching command. If a touch & drag action or a flicking action by a single pointer is input, the controller 180 determines the input action corresponds to a screen switching command.

After a key zone or menu item corresponding to a mode switching command or a screen switching command has been selected, if a touch & drag action or a flicking action is input, the controller 180 can determine the input action as the mode switching command or the screen switching command.

If the mobile terminal 100 is inclined in a right direction (or backward), the controller 180 can determine the inclination as a mode switching command. If the mobile terminal 100 is inclined in a left direction (or forward), the controller 180 can determine the inclination as a screen switching command.

In the determining step S1140, when determining that the mode switching command is input, if a plurality of switchable modes exist, the mobile terminal 100 can determine that the input mode switching command is a mode switching command for switching to which one of the switchable modes. This is possible because input patterns of the mode switching commands for switching to the switchable modes are different from each other. For instance, assuming that the switchable modes in the currently activated state of the 1^{st} mode include 2^{nd} to 5^{th} modes, when a mode switching command is input by a touch & drag action in a vertical direction, it can determine that the mode switching command corresponds to which one of the 2^{nd} to 5^{th} modes with reference to a drag distance, a drag speed, a drag count and the like in the vertical direction. If a mode switching command is input by a backward inclining action of the terminal, it can determine that the mode switching command corresponds to which one of the 2^{nd} to 5^{th} modes with reference to a backward inclination angle, a backward inclination count and the like.

In the determining step S1140, when determining that the screen switching command is input, if a plurality of switchable pages exist, the mobile terminal 100 can determine that the input screen switching command is a screen switching command for switching to which one of the switchable pages. This is possible because input patterns of the screen switching commands for switching to the switchable pages are different from each other. For instance, assuming that the switchable pages in the currently activated state of the 1^{st} mode include 2^{nd} to 5^{th} pages, when a screen switching command is input by a touch & drag action in a horizontal direction, it can determine that the screen switching command corresponds to which one of the 2^{nd} to 5^{th} pages with reference to a drag distance, a drag speed, a drag count and the like in the horizontal direction. If a screen switching command is input by a forward inclining action of the terminal, it can determine that the screen switching command corresponds to which one of the 2^{nd} to 5^{th} pages with reference to a forward inclination angle, a forward inclination count and the like.

If it is determined that the input switching command is the mode switching command in the determining step S1140, the mobile terminal 100 performs a mode switching operation of a switching to the 2^{nd} mode under the control of the controller 180 (S1151). Moreover, if a plurality of the switchable modes (2^{nd} mode included) exist, the mobile terminal 100 can perform a mode switching operation of a switching to a specific mode corresponding to an input pattern of a mode switching command.

In case of performing a mode switching to the 2^{nd} mode, the mobile terminal deactivates the 1^{st} mode but activates the 2^{nd} mode, under the control of the controller 180 (S1153). The 2^{nd} mode activating step S1153 can refer to the former description with reference to the 1^{st} mode activating step S1110.

In the activating step S1153, when executing an application, the mobile terminal 100 can execute the application in accordance with property corresponding to the 2^{nd} mode. For instance, if the 2^{nd} mode and the application are a business mode and a schedule management, respectively, the mobile terminal 100 displays a schedule list consisting of schedules related to the business mode or a specific schedule consisting of a data field corresponding to the business mode.

In the 2^{nd} mode activating step S1153, under the control of the controller 180, the mobile terminal 100 can display at least one of a home screen or a screen corresponding to a 1^{st} page among a plurality of screens corresponding to the 2^{nd} mode, a most recently displayed screen, a user designated screen, an executed screen (e.g., a screen in an early stage of an execution, a screen displayed in case of an execution end) of an application most recently executed in the 2^{nd} mode, and a screen (explained in detail in the following description) related to the screen displayed last in the 1^{st} mode before switching to the 2^{nd} mode. Of course, the above examples are just exemplary and non-limits the present invention.

In the following description, a mode switching in a multi-OS configuration is explained.

First of all, according to a first multi-OS type, if a mode switching command is input in an activated state of a private mode or a business mode, the mobile terminal 100 activates the business mode by driving a hypervisor for Guest OS 2 or can activate the private mode by driving a hypervisor for Guest OS 1.

Secondly, according to a second multi-OS type, if a mode switching command is input in an activated state of a private mode or a business mode, the mobile terminal 100 activates the business mode by driving a hypervisor for Guest OS or can activate the private mode by driving a hypervisor for Host OS.

If the input switching command is determined as the screen switching command in the determining step S1140, the mobile terminal 100 performs a screen switching operation of a switching to a prescribed one of a plurality of the pages configuring the currently activated 1^{st} mode under the control of the controller 180 (S1161). Moreover, if a plurality of switchable pages exist, the mobile terminal 100 can perform a screen switching operation of a switching to a specific page corresponding to an input pattern of a screen switching command.

Under the control of the controller 180, the mobile terminal 100 can display the switched specific page by maintaining the activated state of the first mode (S1163).

In the following description, detailed embodiments of the mode switching operation and the screen switching operation are explained with reference to the accompanying drawings.

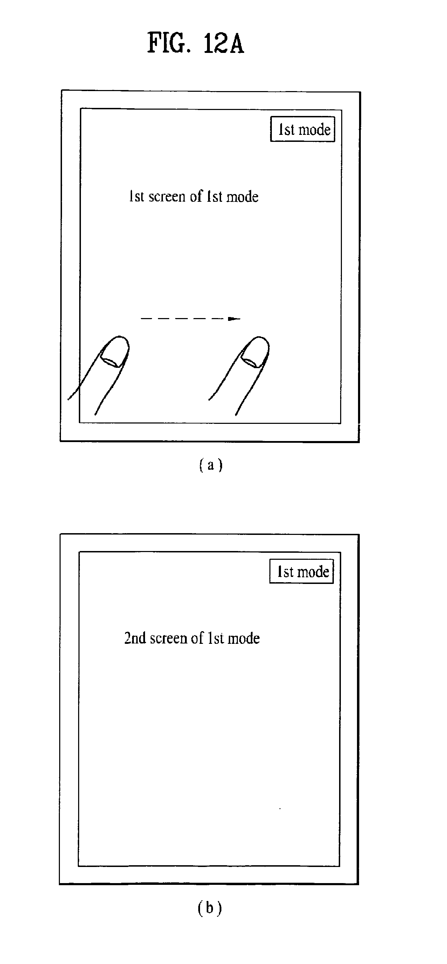

FIGs. 12A to 12C are diagrams of screen configurations for performing a screen switching operation or a mode switching operation to correspond to an input pattern according to the present invention. For clarity and convenience of the following description, assume that a screen switching command is input by a touch & drag action via a single pointer. Assume that a mode switching command is input by a touch & drag action via a plurality of pointers. Of course, as mentioned in the foregoing description, an inputting system of the screen/mode switching command is non-limited by the assumptions but can be implemented in various ways.

Referring to FIG. 12A, while a display state of a 1^{st} screen among a plurality of screens configuring a 1^{st} mode, when receiving an input of a touch & drag action by a single pointer (FIG. 12A (a)), the mobile terminal 100 can display a different screen, which is not the 1^{st} screen, via paging turning action (FIG. 12A (b)).

For instance, if a drag distance, a drag speed or a drag count further increases, a different screen spaced farther from the 1^{st} screen can be displayed. Moreover, a touch & drag action in a left direction commands a forward page turning operation and a touch & drag action in a right direction can command a backward page turning operation.

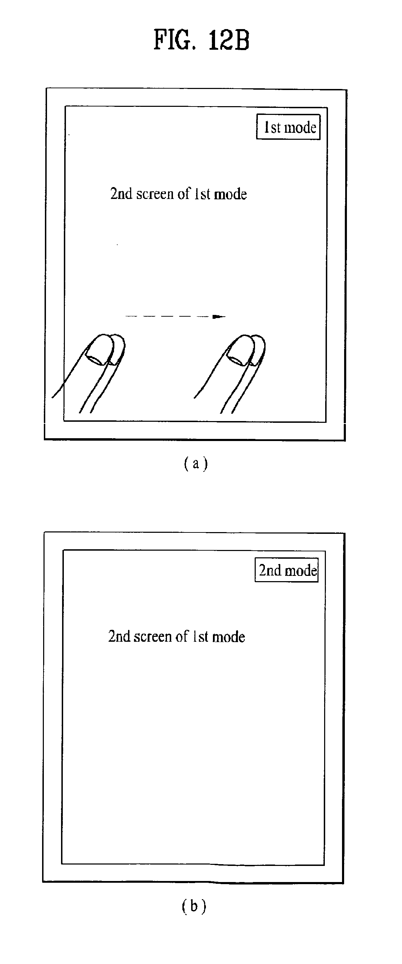

Referring to FIG. 12B, when receiving a touch & drag action by a multi-pointer in a 1^{st} mode activated state (FIG. 12B (a)), the mobile terminal 100 can switch the 1^{st} mode to a 2^{nd} mode (FIG. 12B (b)).

For instance, when a plurality of switching target modes (2^{nd} mode included) exist, if a drag distance, a drag speed or a drag count further increases, the 1^{st} mode can be switched to a different mode remote from the 1^{st} mode. Moreover, a touch & drag action in a left direction commands a forward mode switching operation and a touch & drag action in a left direction can command a backward mode switching operation.

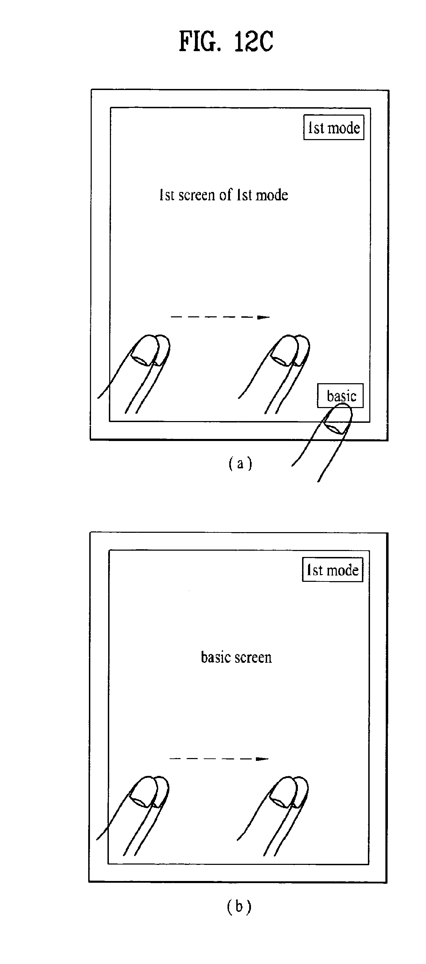

Referring to FIG. 12C, when receiving a selection of a key zone for commanding a basic screen display in a 1^{st} mode activated state (o,1) or an input of a touch & drag action for commanding a basic screen display (o,2) (FIG. 12C (a)), the mobile terminal 100 can display a basic screen (FIG. 12C (b)). In addition, the mobile terminal 100 can receive an input of a mode switching command in a basic screen display state (refer to FIG. 12B).

In this instance, the touch & drag action for commanding the basic screen display can have the same input pattern of the touch & drag action corresponding to the mode switching command. The mobile terminal 100 can have a key zone for commanding a basic screen display. In this instance, the key zone can be provided to a prescribed region of each screen. Moreover, a key (or button) for commanding a basic screen display can be provided to a terminal body (particularly, a front side or a lateral side) of the mobile terminal 100. In a basic screen display state, the mobile terminal maintains the 1^{st} mode activated state or can enter any mode without activating a specific mode.

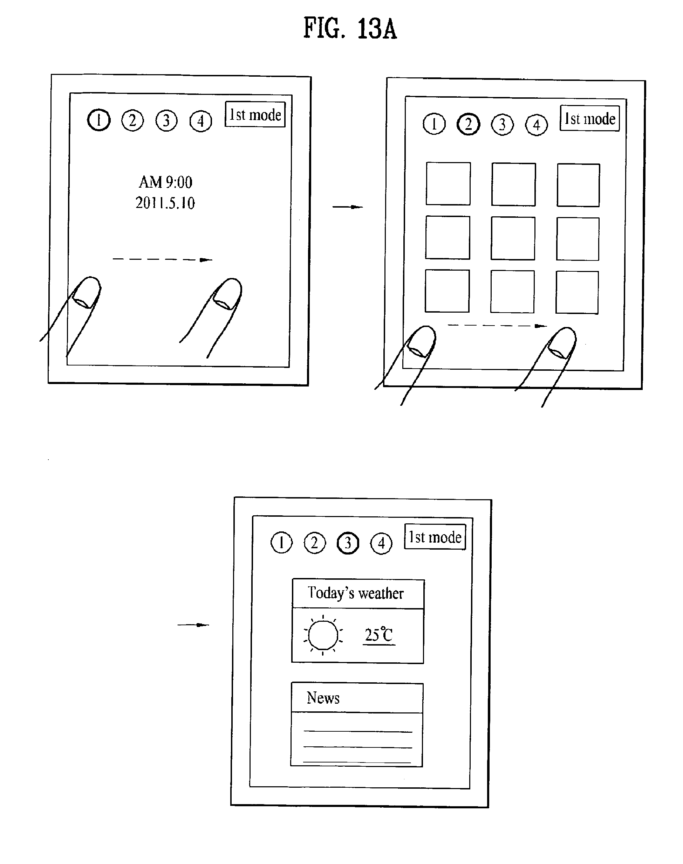

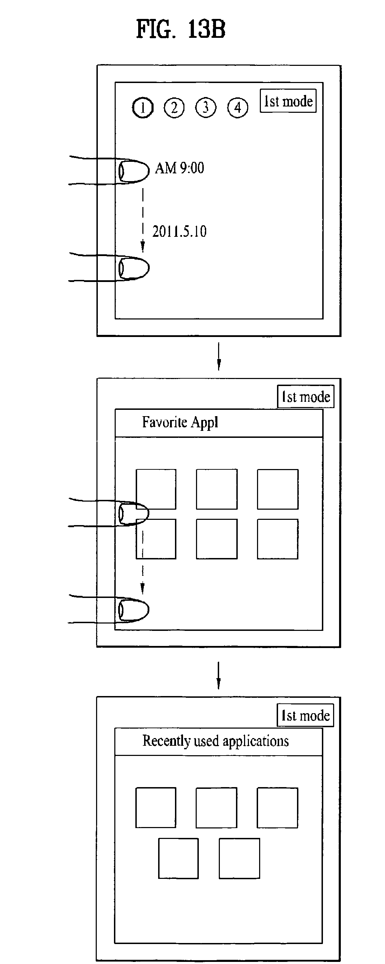

FIG. 13A and FIG. 13B are diagrams for a detailed screen switching operation according to the present invention.

For clarity and convenience of the following description, a screen switching operation can include an inter-screen switching operation of basically configured screens and an inter-screen switching operation of screens that meet a specific condition. For instance, the screens meeting the specific condition can include a screen constructed with indicators of user preferred applications or user preferred widgets, a screen constructed with indicators of recently used application, a screen constructed with indicators of applications meeting a specific category or widgets thereof and the like.

Moreover, a screen switching command is input by a touch & drag action via a single pointer in order to be discriminated from a mode switching command.

Referring to FIG. 13A, while a 1^{st} screen among a plurality of screens (1^{st} to 4^{th} screens included) basically configuring a 1^{st} mode is displayed, when receiving an input of a touch & drag action in a right direction once, the mobile terminal 100 can display the 2^{nd} screen switched from the 1^{st} screen. Thereafter, when receiving an input of a touch & drag action in a right direction once in the display state of the 2^{nd} screen, the controller 180 can display the 3^{rd} screen switched from the 2^{nd} screen.

In this instance, a basic configuration screen can be added by a user. In addition, contents (e.g., widget, application indicator, memo, photo, icon, etc.) contained in the basic configuration screen are configured in accordance with a user selection or can be randomly configured by the mobile terminal 100.

Referring to FIG. 13B, when receiving an input of a touch & drag action in a bottom direction once in a display state of a prescribed screen configuring the 1^{st} mode, the mobile terminal 100 can display a screen (hereinafter named a favorite application screen) including indicators of user's favorite applications via a screen switching operation. Subsequently, when receiving an input of a touch & drag action in the bottom direction once, the mobile terminal 100 can display a screen (hereinafter named a recent application screen) consisting of recently used applications by performing a screen switching operation on the favorite application screen.

In this instance, the number of screens and an inter-screen sequence and configuration, each of which meets a specific condition, are determined in accordance with a user selection or can be randomly determined by the mobile terminal 100.

Although FIG. 13A and FIG. 13B show the screen switching in accordance with the touch count, the switched screen can change to correspond to a touch speed, a touch direction, a touch distance and/or the like.

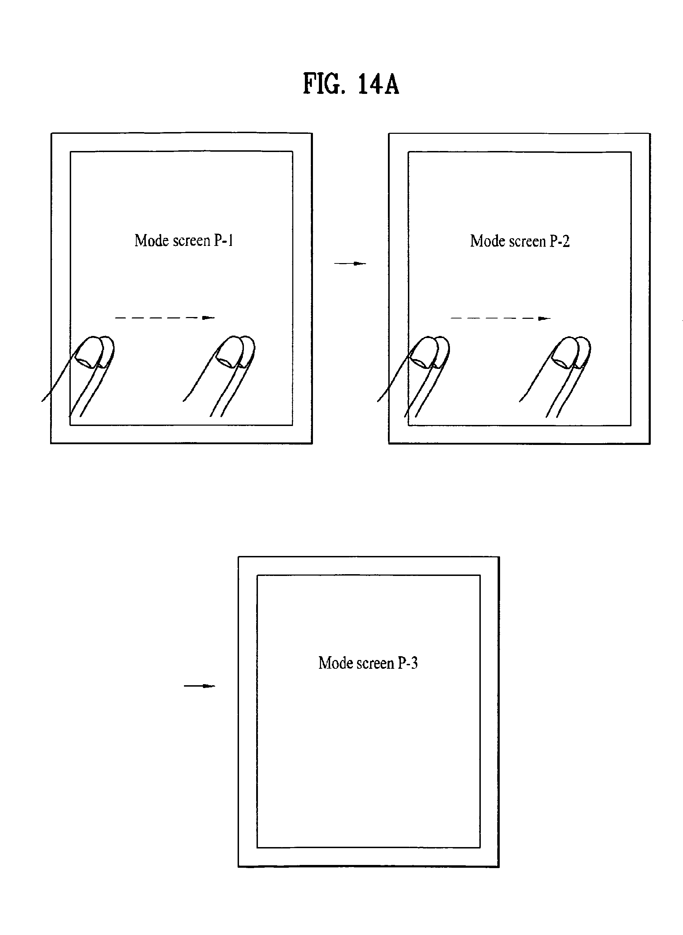

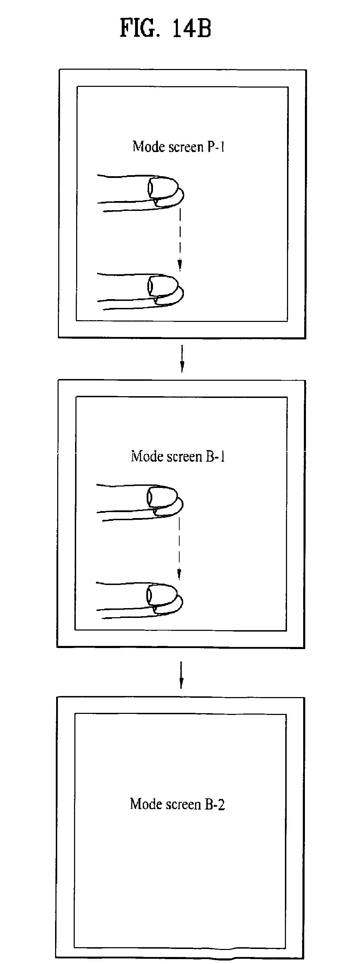

FIG. 14A and FIG. 14B are diagrams for a detailed mode switching operation according to the present invention.

For clarity and convenience of the following description, a mode switching operation can be classified into a mode switching operation among a plurality of private modes and a mode switching operation among a plurality of business modes. In order to be discerned from a screen switching command, a mode switching command is assumed as input by a touch & drag action using a multi-pointer.

Referring to FIG. 14A, when receiving an input of a touch & drag action in a right direction once in an activated state of a 1^{st} private mode, the mobile terminal 100 can switch the 1^{st} private mode to a 2^{nd} private mode by a mode switching operation. Subsequently, when receiving an input of a touch & drag action in the right direction once again in an activated state of the 2^{nd} private mode, the mobile terminal 100 can switch the 2^{nd} private mode to a 3^{rd} private mode by the mode switching operation.

Referring to FIG. 14B, when receiving an input of a touch & drag action in a bottom direction once in an activated state of a 1^{st} private mode, the mobile terminal 100 can switch the 1^{st} private mode to a 1^{st} business mode by a mode switching operation. Subsequently, when receiving an input of a touch & drag action in the bottom direction once again, the mobile terminal 100 can switch the 1^{st} business mode to a 2^{nd} business mode by performing the mode switching operation.

Although FIG. 14A and FIG. 14B show the mode switching in accordance with the touch count, the switched mode can change to correspond to a touch speed, a touch direction, a touch distance and/or the like.

Referring now to FIG. 11, before receiving the input of the mode switching command in the inputting step S1130, the mobile terminal 100 can receive an input of a display command for displaying a multi-mode screen via the user input unit 130. When receiving the input of the multi-mode screen displaying command, under the control of the controller, the mobile terminal 100 can display a 1^{st} dedicated region for displaying an indicator of a dedicated application of the 1^{st} mode, a 2^{nd} dedicated region for displaying an indicator of a dedicated application of the 2^{nd} mode, and a common region for displaying an indicator of a common application of the 1^{st} and 2^{nd} modes.

As mentioned in the above description, the multi-mode screen can include the 1^{st} dedicated region, the 2^{nd} dedicated region and the common region. In addition, the common region can contain a widget executable in the 1^{st} and 2^{nd} modes in common, a screen for configuration settings for driving the 1^{st} and 2^{nd} modes (e.g., display setting, audio setting, wireless & network setting, call setting, etc.) and the like.

Through the user input unit 130, the mobile terminal 100 receives an input of a touch & drag action from a 1^{st} indicator displayed on the common region to the 2^{nd} dedicated region or can receive an input of a touch action on a 2^{nd} indicator displayed on the 2^{nd} dedicated region.

When receiving the input of the touch & drag action on the 1^{st} indicator or the input of the touch action on the 2^{nd} indicator, the mobile terminal 100 can enter the 2^{nd} mode under the control of the controller 180 (S1151). In doing so, the mobile terminal 100 can execute a 1^{st} application indicated by the 1^{st} indicator or a 2^{nd} application indicated by the 2^{nd} indicator as soon as activating the 2^{nd} mode. Of course, an executed screen of the 1^{st} or 2^{nd} application can be displayed if necessary.

Moreover, the mobile terminal 100 can display either a common screen of the 1^{st} and 2^{nd} modes or a screen of the 2^{nd} mode to correspond to an input pattern of the mode switching command. In this instance, the common screen can correspond to the common region of the multi-mode screen. In particular, the common screen is displayed in the 1^{st} mode activated state. Yet, the screen of the second mode can be displayed as the 2^{nd} mode is entered when receiving a mode switching command again. Of course, after the 2^{nd} mode has been entered to correspond to the mode switching command, the common screen or the screen of the second mode can be displayed.

In the following description, a multi-mode screen display and a mode switching operation in a multi-mode screen display state are explained with reference to the accompanying drawings.

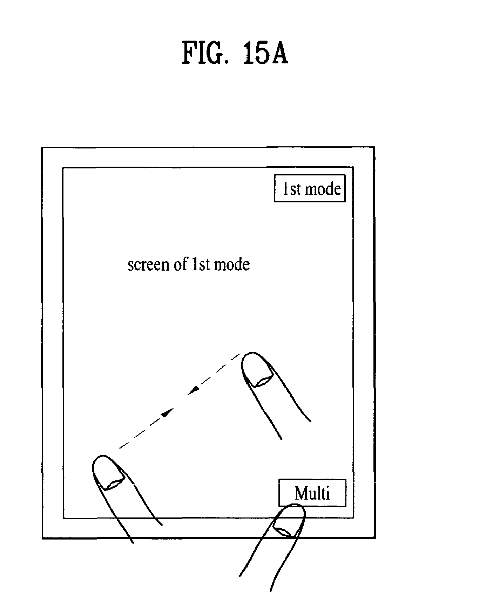

FIGs. 15A to 15E are first diagrams for displaying a multi-mode screen according to the present invention.

Referring to FIG. 15A, the mobile terminal 100 can receive an input of a display command for displaying a multi-mode screen in a 1^{st} mode activated state. For instance, the multi-mode screen display command is input by a selection action on a key zone (Multi) provided to a screen (o,1) or a pinch-in action on the screen (o,2), which are just exemplary. In addition, the multi-mode screen display command can be determined as input by a switching from a portrait view direction to a landscape view direction only.

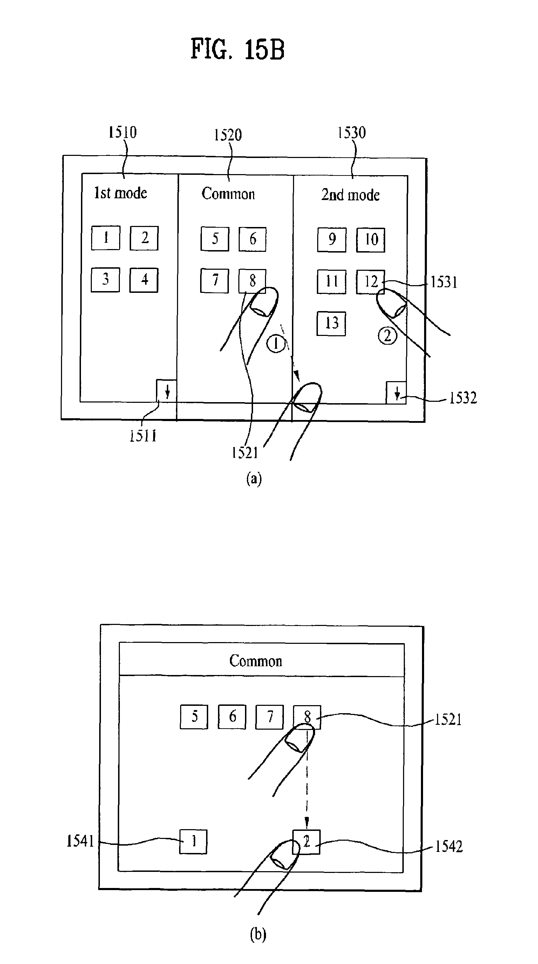

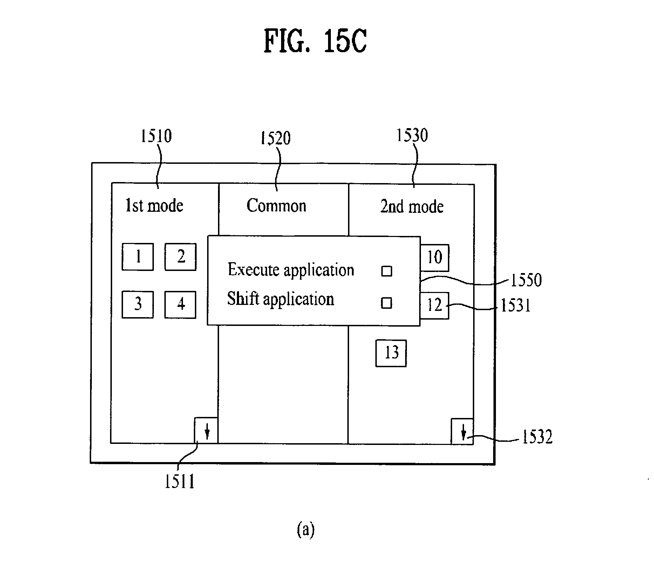

Referring to FIG. 15B, when receiving the input of the multi-mode screen display command, a 1^{st} dedicated region 1510, a common region 1520 and a 2^{nd} dedicated region 1530 can be provided to a whole screen of the mobile terminal 100 (FIG. 15B (a)). Alternatively, a content of the common region 1520 is displayed on the whole screen and a key zone 1541 indicating a 1^{st} mode and a key zone 1542 indicating a 2^{nd} mode can be displayed on a prescribed region of the screen (FIG. 15B (b)). Referring to FIG. 15C, in case (1) of receiving an input of a touch & drag action from an 8^{th} indicator 1521 of the common region 1520 (o,1) or an input of a touch action on each of the 8^{th} indicator 1521 and the 2^{nd} dedicated region 1530 or in case (2) of receiving an input of a touch & drag action from the 8^{th} indicator shown in FIG. 15B (b) to the key zone 1542 indicating the 2^{nd} mode or an input of a touch action on each of the 8^{th} indicator 1521 and the key zone 1542, the mobile terminal 100 can display a window 1550 for selecting whether to execute an 8^{th} application indicated by the 8^{th} indicator 1521 in the 2^{nd} mode (Execute) or shift to the 2^{nd} mode (Shift).

Meanwhile, in a manner of changing an input pattern of the touch & drag action or the touch action input in FIG. 15B (a) or FIG. 15B (b), it can directly input a command for executing or shifting the 8^{th} application (In this instance, FIG. 15C can be omitted).

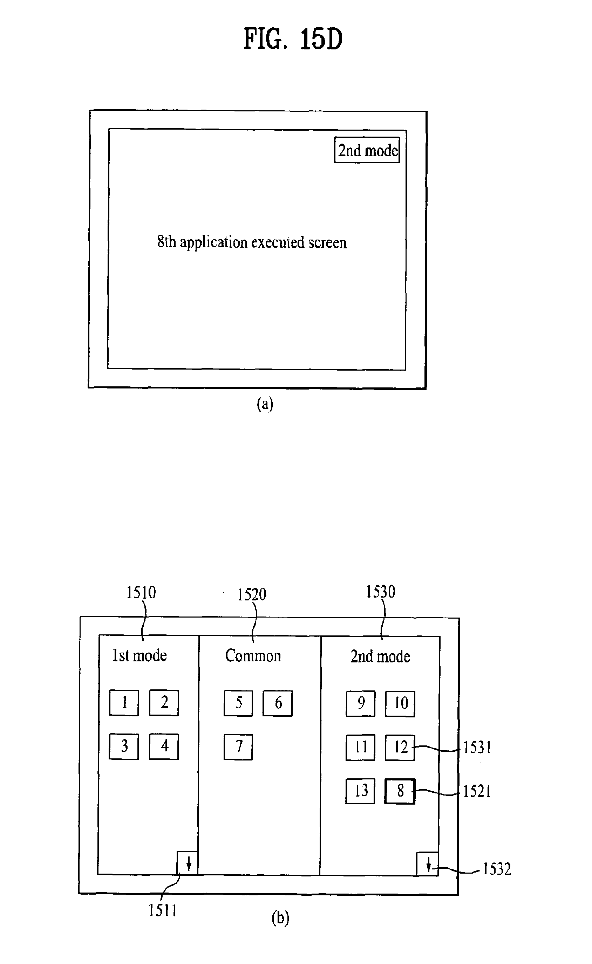

Referring to FIG. 15D, if 'Execute' is selected in FIG. 15C, the mobile terminal 100 can execute the 8^{th} application by centering the 2^{nd} mode (FIG. 15D (a)). If 'Shift' is selected in FIG. 15C, the mobile terminal 100 can shift the 8^{th} application to the 2^{nd} mode. In particular, if the 8^{th} application is shifted to the 2^{nd} mode, it can mean that the 8^{th} application is set as a dedicated application of the 2^{nd} mode. Hence, the 8^{th} indicator 152 stops being displayed on the common region 1520 and is displayed on the 2^{nd} dedicated region 1530 only.

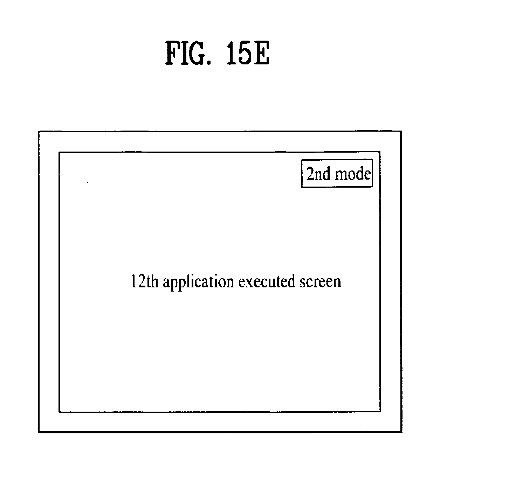

Referring to FIG. 15E, when receiving the touch action o,2 on a 12^{th} indicator 1531 shown in the 2^{nd} dedicated region in FIG. 15B (a), the mobile terminal 100 can execute a 12^{th} application indicated by the 12^{th} indicator 1531 by entering the 2^{nd} mode.

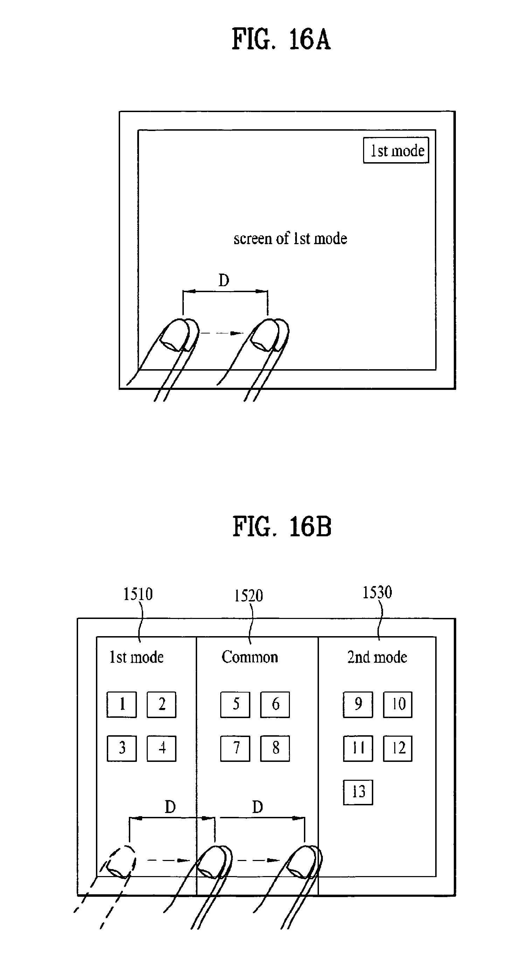

FIGs. 16A to 16C are second diagrams for displaying a multi-mode screen according to the present invention. For clarity and convenience of the following description, assume that a mode switching command is input by a touch & drag action using a multi-pointer.

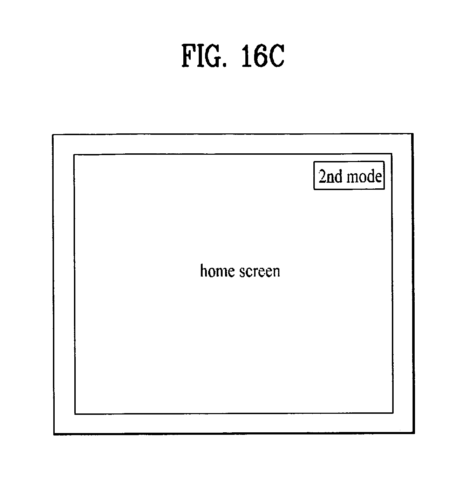

Referring to FIG. 16, when receiving an input of a touch & drag action (1^{st} distance D) in a right direction corresponding to a mode switching command in a 1^{st} mode activated state (FIG. 16A), the mobile terminal 100 can display a multi-mode screen (FIG. 16B). In case of receiving an input of a touch & drag action (2^{nd} distance 2D) in a right direction corresponding to a mode switching command in FIG. 16A or an input of a touch & drag action (1^{st} distance D) in a right direction corresponding to a mode switching command in FIG. 16B, the mobile terminal 100 can enter a 2^{nd} mode (FIG. 16C).

Moreover, when receiving an input of a touch & drag action (2^{nd} distance 2D) in a left direction corresponding to a mode switching command in FIG. 16C or an input of a touch & drag action (1^{st} distance D) in a left direction corresponding to a mode switching command in FIG. 16B, the mobile terminal 100 can return to the state shown in FIG. 16A.

Referring now to FIG. 11, when determining that the input switching command is determined as the mode switching command in the determining step S1140, the mobile terminal 100 can request an authentication procedure before performing the mode switching operation under the control of the controller 180. Subsequently, after the authentication procedure has been validly performed, the mobile terminal 100 can perform the mode switching operation under the control of the controller 180 (S1151).

The controller 180 can request the authentication procedure in one of a case that a conditional access is set on the 2^{nd} mode to switch to, a case that a security level set on the 2^{nd} mode is higher than that set on the 1^{st} mode despite that a security level is set on each of the 1^{st} mode and the 2^{nd} mode, and a case that the 1^{st} mode and the 2^{nd} mode are the private mode and the business mode, respectively.

In particular, the authentication procedure receives an input of a user authentication information from a user and then determines whether the input user authentication information is valid. If the input user authentication information is valid, the authentication procedure can grant the switching to the 2^{nd} mode.

For instance, the user authentication information includes a user authentication information set dedicated to the 2^{nd} mode or a user authentication information necessary for the mode switching in common without being limited to the 2^{nd} mode. Moreover, the user authentication information can be set different in accordance with a conditional access level (or a security level) of the 2^{nd} mode. For instance, if the conditional access level is high, the user authentication information can be complicated. If the conditional access level is low, the user authentication information can be simple.

When the 2^{nd} mode is entered plural times, the controller 180 can request a user authentication information differing each entry. The controller 180 can receive an input of a user authentication information at a user-specific timing point of entering the 2^{nd} mode from a user.

After the authentication procedure for the switching to the 2nd mode has been successfully completed, the authentication procedure can be skipped when re-switching to the 2^{nd} mode later. For instance, it can skip the corresponding authentication procure in case of a re-switching for a predetermined period of time (e.g., duty hours, a day, a week, etc.), a re-switching for a period between terminal-on and terminal-off, and the like.

Moreover, under the control of the controller 180, if the authentication procedure is not validly performed, the mobile terminal 100 maintains the 1^{st} mode activated state or can just execute a basic one (e.g., call, message, schedule, etc.) of applications of the 2^{nd} mode despite entering the 2^{nd} mode.

In the following description, a process for performing an authentication procedure in the course of a mode switching operation is explained with reference to the accompanying drawings.

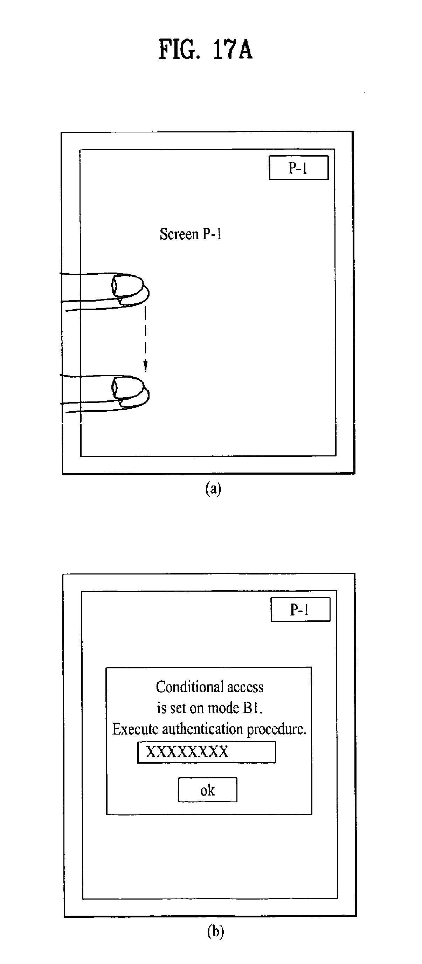

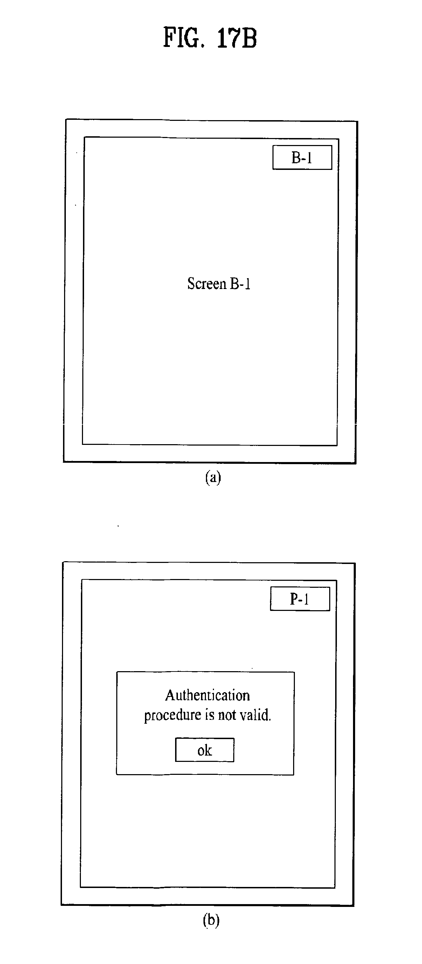

FIG. 17A and FIG. 17B are diagrams for performing an authentication procedure in case of a mode switching operation according to the present invention. For clarity and convenience of the following description, assume a switching to a 1^{st} business mode from a 1^{st} private mode. In addition, assume that a mode switching command is input by a touch & drag action in a vertical direction using a multi-pointer.

Referring to FIG. 17A, when receiving an input of a touch & drag action corresponding to a mode switching command to a 1^{st} business mode in an activated state of a 1^{st} private mode (FIG. 17A (a)), the mobile terminal 100 can request an authentication procedure for switching to the 1^{st} business mode (FIG. 17A (b)).

For instance, in the course of the authentication procedure, a user can input such a user authentication information as a password, a user fingerprint, a user face image (necessary to turn on a camera module), a user voice, a specific touch pattern, a user iris recognition and the like. Hence, the mobile terminal 100 can determine whether the authentication procedure is valid in a manner of determining whether the input user authentication information matches a previously registered user authentication information.

Referring to FIG. 17B, if the authentication procedure is valid, the mobile terminal 100 can switch the 1^{st} private mode to the 1^{st} business mode (FIG. 17B (a)). On the contrary, if the authentication procedure is not valid, the mobile terminal 100 can maintain the 1^{st} private mode activated state (FIG. 17B (b)). Of course, the authentication procedure can keep being performed within a count limit in accordance with a user selection.

Referring now to FIG. 11, the step S1151 of switching to the 2^{nd} mode can be performed while the specific application is being executed in the 1^{st} mode. In doing so, the controller 180 acquires a property of the executed specific application can then execute the specific application or a different application to correspond to the acquired property.

For instance, if the specific application is the common application, the mobile terminal 100 can maintain the executed state of the specific application after the 2^{nd} mode switching as well. If the specific application is the dedicated application, the mobile terminal 100 can execute a different application having the equal/similar function of the specific application after the 2^{nd} mode switching.

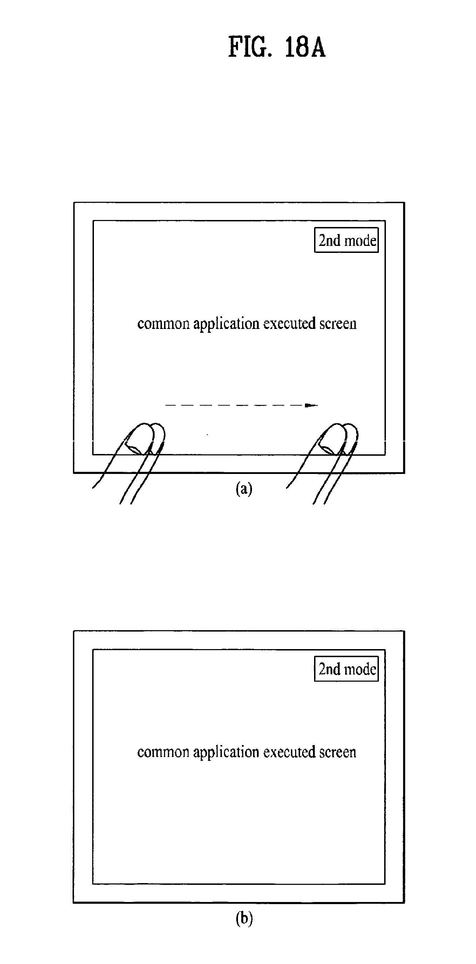

A case of performing a mode switching operation in a communication application executed state is described with reference to FIGs. 18A to 18C as follows. For clarity and convenience of the following description, assume that mode switching command can be input by a touch & drag action in a horizontal direction using a multi-pointer.

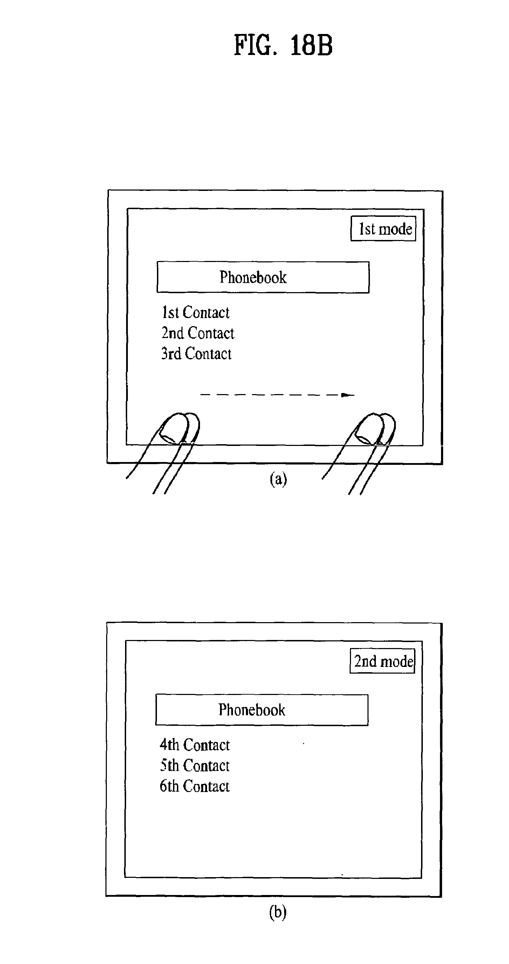

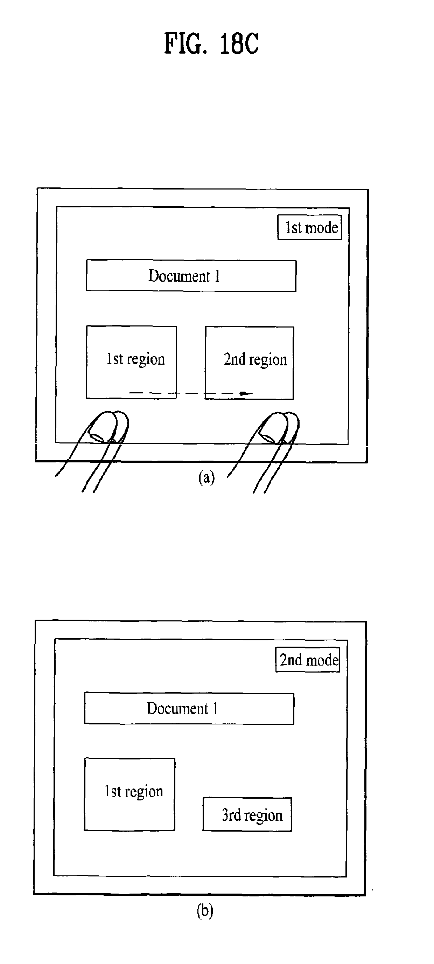

Referring to FIG. 18A, when receiving an input of a touch & drag action corresponding to a mode switching command for switching to a 2^{nd} mode in the course of executing a common application in a 1^{st} mode activated state (FIG. 18A (a)), the mobile terminal 100 can keep executing the common application in a 2^{nd} mode activated state by switching the 1^{st} mode to the 2^{nd} mode (FIG. 18A (b)). In particular, FIG. 18B shows a case that the common application is a phonebook application. In addition, FIG. 18C shows a case that the common application is a document application.

Referring to FIG. 18B, when receiving an input of a touch & drag action corresponding to a mode switching command for switching to a 2^{nd} mode in the course of displaying a phonebook consisting of Contacts (i.e., 1^{st} to 3^{rd} Contacts) in accordance with a phonebook application execution in a 1^{st} mode activated state (FIG. 18B (a)), the mobile terminal 100 maintains the phonebook application execution in a 2^{nd} mode activated state by switching the 1^{st} mode to the 2^{nd} mode and is also able to display the phonebook consisting of Contacts (i.e., 4^{th} to 6^{th} Contacts) related to the 2^{nd} mode (FIG. 18B (b)).

Referring to FIG. 18C, when receiving an input of a touch & drag action corresponding to a mode switching command for switching to a 2^{nd} mode in the course of displaying a 1^{st} document consisting of 1^{st} region and 2^{nd} region in accordance with a document application execution in a 1^{st} mode activated state (FIG. 18C (a)), the mobile terminal 100 can maintain the document application execution in a 2^{nd} mode activated state by switching the 1^{st} mode to the 2^{nd} mode (FIG. 18C (b)). Yet, if the 1^{st} document is the data dedicated to the 1^{st} mode only, the 1^{st} document may not be further displayed after the 2^{nd} mode switching. If a content of the 1^{st} document provided in the 1^{st} mode and a content of the 1^{st} document provided in the 2^{nd} mode are different from each other, the 1^{st} document displayed in the 2^{nd} mode can consist of a 1^{st} region and a 3^{rd} region.

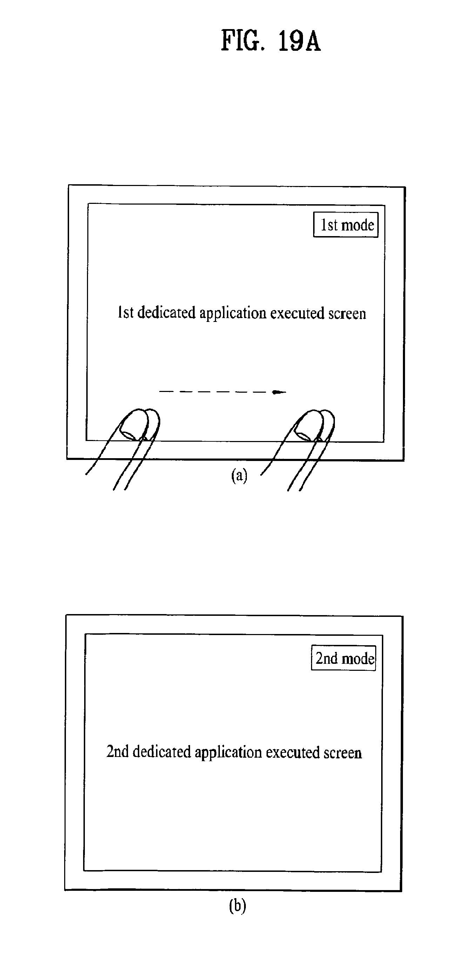

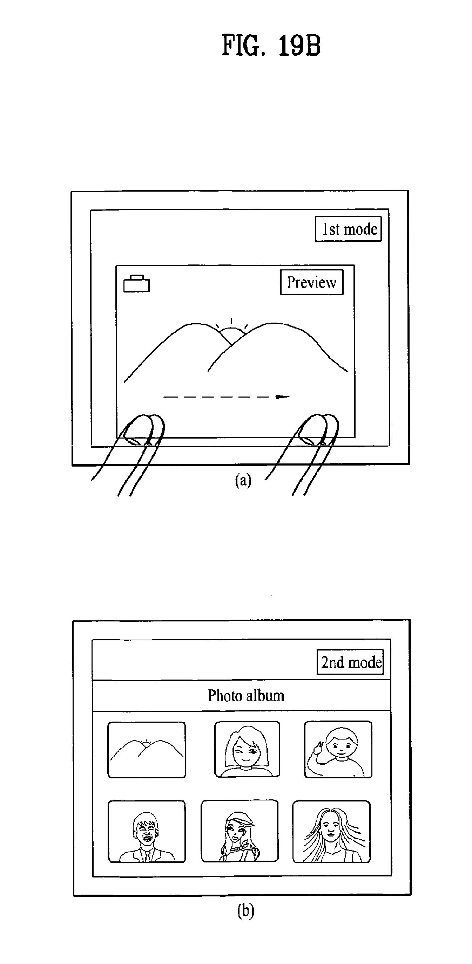

In the following description, a case of performing a mode switching operation in a dedicated application executed state is explained with reference to FIG. 19A and FIG. 19B. For clarity and convenience of the following description, assume that a mode switching command can be input by a touch & drag action in a horizontal direction using a multi-pointer.

Referring to FIG. 19A, when receiving an input of a touch & drag action corresponding to a mode switching command for switching to a 2^{nd} mode in the course of executing a 1^{st} dedicated application in a 1^{st} mode activated state (FIG. 19A (a)), the mobile terminal 100 can execute a 2^{nd} dedicated application (or a common application) having the equal/similar function of the 1^{st} dedicated application in a 2^{nd} mode activated state by switching the 1^{st} mode to the 2^{nd} mode (FIG. 19A (b)). For instance, a camera application and a photo album application can be regarded as having equal or similar functions. For another instance, a video cal application and a voice call application can be regarded as having equal or similar functions. Moreover, an internet application by a 1^{st} browser and an internet application by a 2^{nd} application can be regarded as having equal or similar applications, which considers that viewable information (or contents) can differ from each other in case of different browsers despite that the same internet site is accessed.

Referring to FIG. 19B, when receiving an input of a touch & drag action corresponding to a mode switching command for switching to a 2^{nd} mode in the course of executing a camera application in a 1^{st} mode activated state (FIG. 19B (a)), the mobile terminal 100 can execute a photo album application having the equal/similar function of the camera application in a 2^{nd} mode activated state by switching the 1^{st} mode to the 2^{nd} mode (FIG. 19B (b)).

Referring now to FIG. 11, when performing the mode switching operation from the 1^{st} mode to the 2^{nd} mode in the switching step S1151, the mobile terminal acquires a screen configuration property of the screen displayed in the 1^{st} mode can then display the screen corresponding to the acquired screen configuration property in an activated state of the switched 2^{nd} mode, under the control of the controller 180. In this instance, the screen configuration property can include per-application category/function/name or size/position/arrangement of an application indicator if the 1^{st} mode screen is an application indicator display screen. The screen configuration property can include function/name/display information/size/position of a corresponding widget if the 1^{st} mode screen is a widget display screen. The screen configuration property can include name/property/category/presence or non-presence of dedicated or common application and the like if the 1^{st} mode screen is an application executed screen.

Moreover, the mobile terminal 100 sets a temporary mode mapping state right after the switching to the 2^{nd} mode and then displays the screen corresponding to the acquired screen configuration property as a default. In case of receiving an input of a command for canceling the temporary mode mapping state from a user, the mobile terminal 100 can perform a screen display process (refer to the former descriptions) in accordance with a normal mode switching. For instance, in case of a normal mode switching, the mobile terminal 100 can display a home screen of the switched mode or a screen corresponding to a 1^{st} page thereof.

In this instance, the temporary mode mapping state can mean a status for maintaining the screen display state of the 1^{st} mode temporarily despite that the 1^{st} mode is normally switched to the 2^{nd} mode. This is to secure the continuity of the display screen at a predetermined level despite the mode switching. Moreover, the execution maintaining of the common application or the execution of the different application having the equal/similar function in accordance with the mode switching described with reference to FIGs. 18A to 19B can be regarded as performed in the temporary mode mapping state.

The temporary mode mapping state is described in detail with reference to the accompanying drawings as follows.

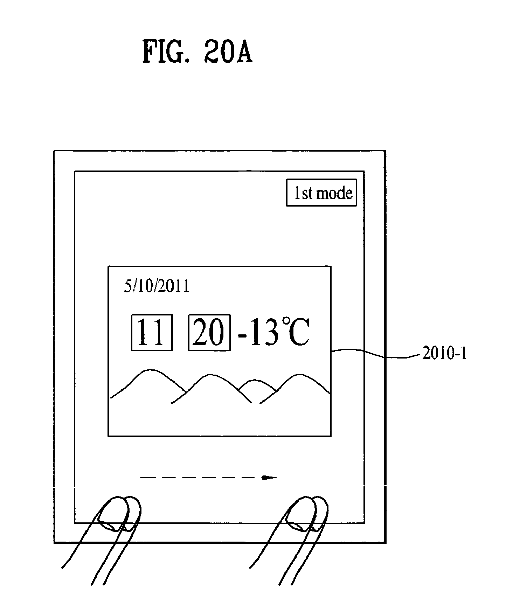

FIGs. 20A to 22B are diagrams for a temporary mapping state of screens in case of performing a mode switching operation according to the present invention.

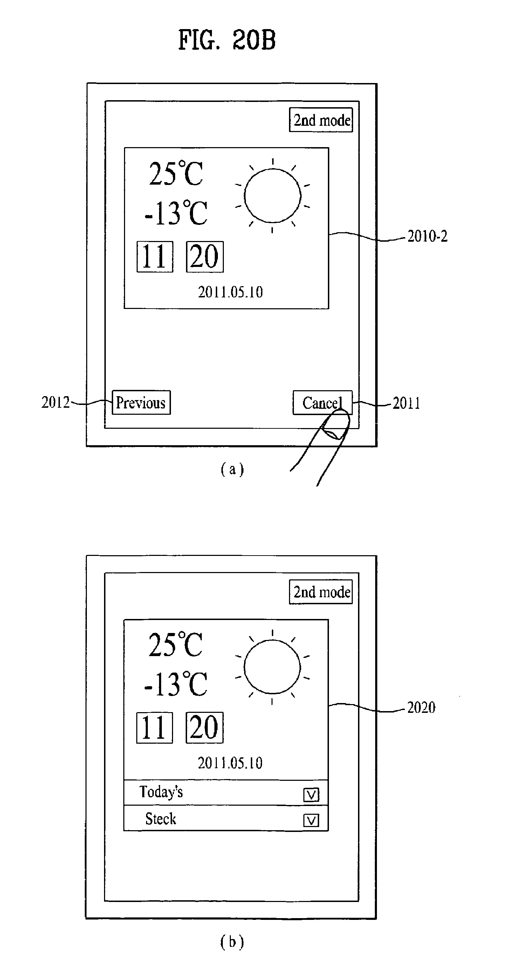

Referring to FIG. 20A and FIG. 20B, when receiving an input of a mode switching command for switching to a 2^{nd} mode in the course of displaying a weather widget 2010-1 in a 1^{st} mode activated state (FIG. 20A), the mobile terminal 100 activates the 2^{nd} mode by switching to the 2^{nd} mode and then sets a temporary mode mapping state, thereby displaying a weather widget 2010-2 having an equal or similar size, information and display position of the former weather widget 2010-1 (FIG. 20B (a)). In this instance, the latter weather widget 2010-2 is a common widget of the 1^{st} and second modes or a dedicated widget of the 2^{nd} mode.

Thereafter, when receiving an input of a command for canceling the temporary mode mapping state from a user in FIG. 20B (a), the mobile terminal 100 can display a weather widget 2020 designated to be executed in the 2^{nd} mode (FIG. 20B (b)).

For instance, the canceling command is input if a key zone (Cancel) 2011 provided to the screen is selected. For another instance, the canceling command can be input by such an input corresponding to the canceling command as a voice input, a motion input, a terminal motion input, a menu item selection and the like.

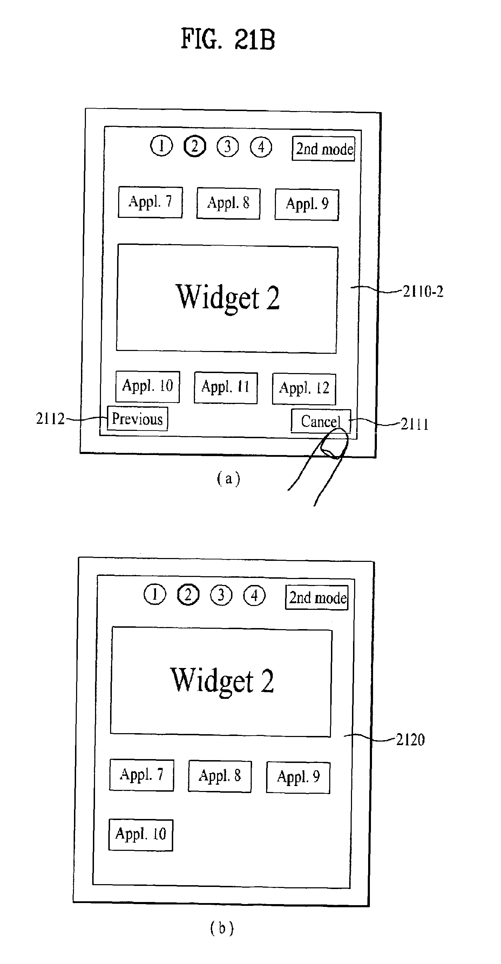

Referring to FIG. 21A and FIG. 21B, when receiving an input of a mode switching command for switching to a 2^{nd} mode in the course of displaying 1^{st} to 6^{th} application indicators and a 1^{st} widget in a 1^{st} mode activated state (FIG. 21A), the mobile terminal 100 activates the 2^{nd} mode by switching to the 2^{nd} mode and then sets a temporary mode mapping state, thereby displaying 7^{th} to 12^{th} application indicators and a 2^{nd} widget (FIG. 21B (a)). In this instance, applications corresponding to the 7^{th} to 12^{th} application indicators and a 2^{nd} widget can be executed in the 2^{nd} mode.

In particular, the number and position arrangement of the application indicators and widget displayed are not changed before and after the mode switching. In addition, the application indicator or widget at the same position before and after the mode switching can have the equal or similar function.

In case of receiving an input of a command for canceling the temporary mode mapping state from a user in FIG. 21B (a) (by selection of a key zone (Cancel) 2111), the mobile terminal 100 displays a screen containing at least one of the 7^{th} to 12^{th} application indicators and the 2^{nd} widget or a screen corresponding to a 2^{nd} page equal to a page used to be displayed in the 1^{st} mode before the mode switching (FIG. 21B (b)).

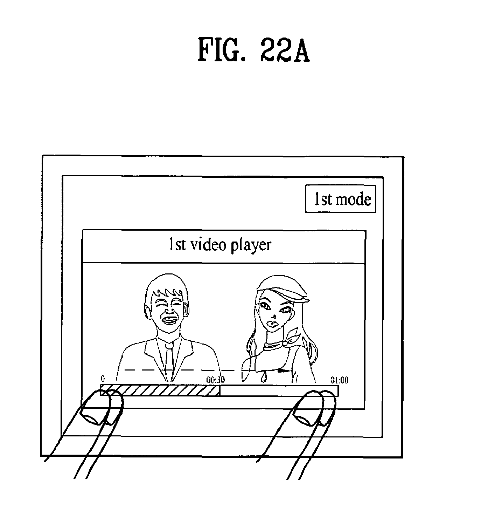

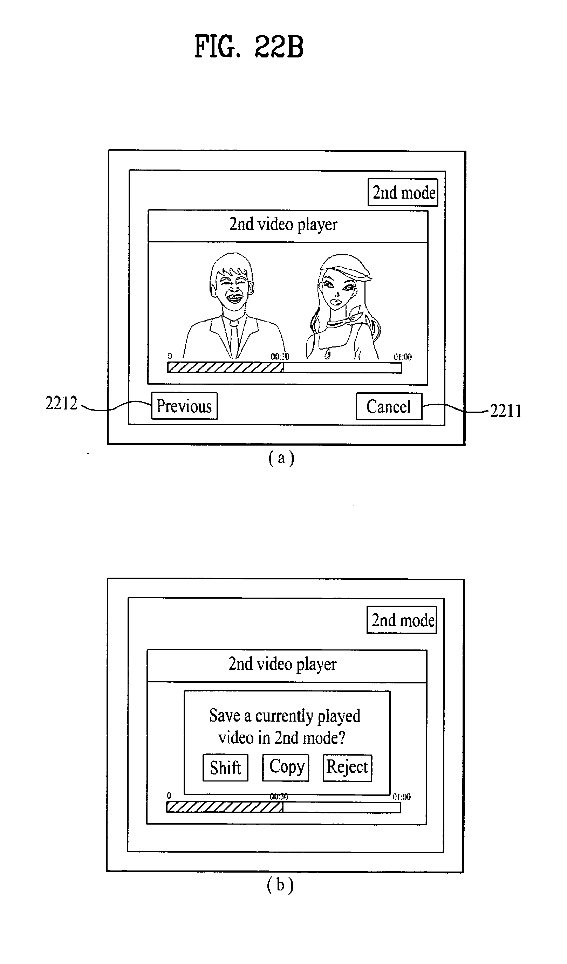

Referring to FIG. 22A and FIG. 22B, when receiving an input of a mode switching command for switching to a 2^{nd} mode in the course of playing a 1^{st} video in a 1^{st} mode activated state (FIG. 22A), the mobile terminal 100 activates the 2^{nd} mode by switching to the 2^{nd} mode and then sets a temporary mode mapping state, thereby keeping displaying the 1^{st} video (FIG. 22B (a)).

In this instance, a video player of the 1^{st} mode can be different from (if 'dedicated') or equal to (if 'common') each other. In addition, a function related to a video play can be differentiated in accordance with the video player.

Moreover, if the 1^{st} video currently played in the 2^{nd} mode corresponds to the 1^{st} mode only (i.e., dedicated to the 1^{st} mode), the mobile terminal 100 enables a user to select whether to shift or copy the 1^{st} video to the 2^{nd} mode (FIG. 22B (a)). For instance, if 'shift' is selected, the 1^{st} video can correspond to the 2^{nd} mode only (dedicated to the 2^{nd} mode). If'copy' is selected, the 1^{st} video can correspond to both of the 1^{st} mode and the 2^{nd} mode (common to the 1^{st} mode and the 2^{nd} mode).

In case of receiving an input of a command for canceling the temporary mode mapping state from a user in FIG. 22B (a) (by selection of a key zone (Cancel) 2211), the mobile terminal 100 stops playing the 1^{st} video and can display a screen according to a normal mode switching.

In case of receiving an input of a command for canceling the temporary mode mapping state, the mobile terminal 100 can display a home screen of the 2^{nd} mode, a screen corresponding to a 1^{st} page of the 2^{nd} mode, a screen last displayed in a previously activated state or the like.

The mobile terminal 100 can determine whether to set a temporary mode mapping state in accordance with a user selection. For instance, if a temporary mode mapping state setting is selected, the mobile terminal 100 can perform embodiments related to the above-described temporary mode mapping. Yet, if the temporary mapping state setting is not selected, the mobile terminal 100 can perform a screen display according to a normal mode switching.

The mobile terminal 100 can save a screen of a temporary mode mapping state in the memory 160 under the control of the controller 180. In this instance, the saved target screen can include a predetermined number of screens right before the canceling of the temporary mode mapping state. Moreover, the screen of the temporary mode mapping state can be additionally configured with the screen of the 2^{nd} mode.

The command for canceling the temporary mode mapping state is input by manipulating such a key generally provided to the mobile terminal 100 as a home key, a power key, a side key and the like or by touching a key zone (e.g., a key zone having a designated function variable in accordance with a current terminal status) displayed on the screen. In this instance, a separate key or key zone for receiving an input of the canceling command may not be provided.

When information (or data) contained in the screen used to be displayed in the 1^{st} mode before the mode switching is not supported in the 2^{nd} mode, the mobile terminal 100 can display a home screen of the 2^{nd} mode or a most recently displayed screen. In this instance, it can output a text or speech for announcing that the temporary mode mapping state is not executable.

If a conditional access or a security level higher than that of the 2^{nd} mode is set on the screen previously displayed in the 1^{st} mode before the mode switching, the mobile terminal 100 can request an authentication procedure for the setting of a temporary mode mapping state (refer to the following description of an authentication procedure request). Moreover, if the authentication procedure is validly performed, a screen of the temporary mode mapping state is displayed as a screen of the switched 2^{nd} mode. If the authentication procedure is not validly performed, a home screen of the 2^{nd} mode or a most recently displayed screen can be displayed as a screen of the switched 2^{nd} mode.

Referring now to FIG. 11, the mobile terminal 100 performs a screen switching operation among a plurality of pages by a switching command in the 1^{st} mode activated state (S1161). If a last page is reached, the mobile terminal 100 can perform a mode switching operation for switching to the 2^{nd} mode by the switching command (S1151).

In this instance, the switching command corresponding to the screen switching operation needs not to have an input pattern different from that of the switching command corresponding to the mode switching operation. This is because the controller 180 recognizes a switching command, which is input in a state that the screen switching operation cannot be further performed, as a mode switching command and recognizes a previous switching command as a screen switching command.

For instance, a plurality of the pages can include a plurality of pages configured in accordance with an execution of a specific application, which is executed in a 1^{st} mode, as well as pages basically configuring the 1^{st} mode or pages meeting a specific condition in the 1^{st} mode.

The mobile terminal 100 displays a list containing a plurality of items in a 1^{st} mode activated state can then scroll a plurality of the items by receiving an input of a touch & drag action. When a last one of a plurality of the items is displayed or there is no more item to be scrolled, the mobile terminal 100 can enter a different mode by receiving an input of a mode switching command by a subsequently input touch & drag action (S1151). In this instance, an input pattern of the touch & drag action for the item scroll needs not to be different from that of the touch & drag action for the mode switching. This is because the controller 180 determines that a touch & drag action, which is input in a status that there is no more item to be scrolled, corresponds to a mode switching command.

In case of performing a mode switching operation from the 1^{st} mode to the 2^{nd} mode by interconnecting to a page turning action or an item scroll action, if a common application is being executed in the 1^{st} mode, the mobile terminal 100 keeps executing the common application in the 2^{nd} mode. If a dedicated application is being executed in the 1^{st} mode, the mobile terminal 100 can execute the application having a function equal to similar to that of the dedicated application in the 2^{nd} mode.

This is described with reference to the accompanying drawings as follows.

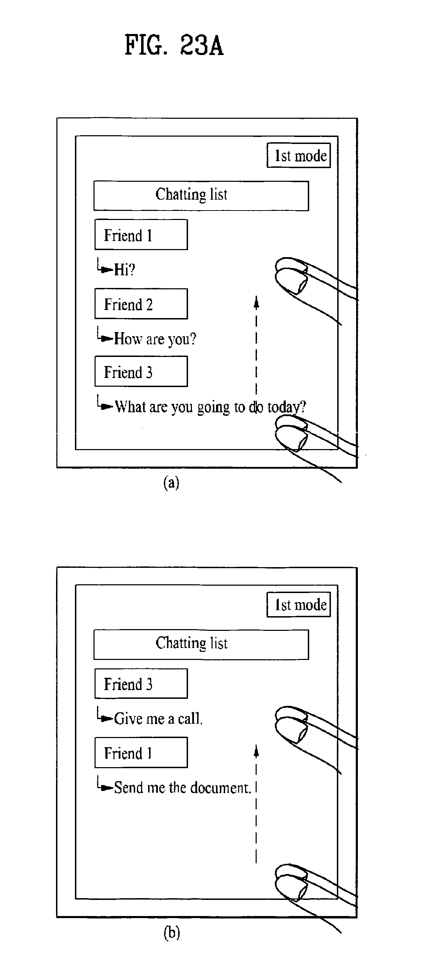

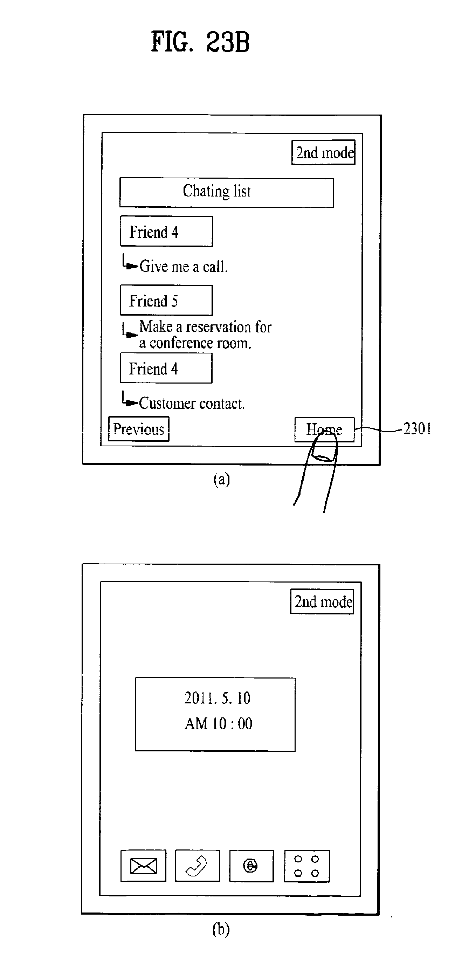

FIG. 23A and FIG. 23B are diagrams for performing a mode switching operation by interconnecting to an item scroll action in the course of executing a chatting application as a common application.

Referring to FIG. 23A, the mobile terminal 100 displays a chatting list in accordance with a chatting application execution in a 1^{st} mode activated state can then scroll chatting items contained in the chatting list to correspond to a touch & drag action (or a flicking action) input from a user. In this instance, the chatting items contained in the first mode chatting list indicate a chat with a chatting friend corresponding to the 1^{st} mode or a chat performed in the 1^{st} mode activated state.

Referring to FIG. 23B, when receiving an input of a touch & drag action from a user in a status that there is no more chatting item to be scrolled (i.e., a last page display) (cf. FIG. 23A (b)), the mobile terminal 100 enters a 2^{nd} mode, keeps executing the chatting application in the 2^{nd} mode, and can display a chatting list containing a plurality of chatting items. Hence, the user can be provided with the seamless chatting list despite the mode switching. In this instance, the chatting item contained in the chanting list of the 2^{nd} mode can indicate a chat with a chatting friend corresponding to the 2^{nd} mode or a chat performed in a 2^{nd} mode activated state.

Moreover, referring to FIG. 23B, when receiving an input of a home screen display command, the mobile terminal 100 ends the chatting application can then display a home screen of the 2^{nd} mode. In this instance, the home screen display command can be input by at least one of a selection of a corresponding key zone (Home) 2301, a terminal motion input, a menu item selection and the like.

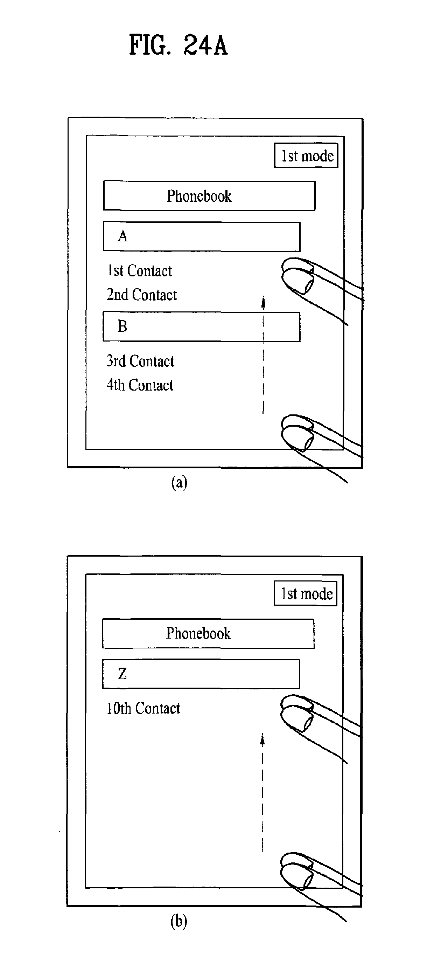

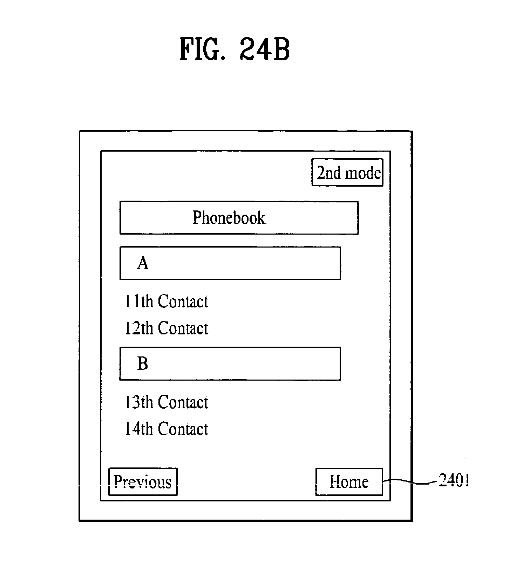

FIG. 24A and FIG. 24B are diagrams for performing a mode switching operation by interconnecting to an item scroll action in the course of executing a phonebook application as a common application.

Referring to FIG. 24A, the mobile terminal 100 displays a Contact list in accordance with a phonebook application execution in a 1^{st} mode activated state can then scroll Contact items contained in the Contact list to correspond to a touch & drag action (or a flicking action) input from a user. In this instance, the Contact items contained in the first mode Contact list indicates a Contact information (e.g., name, nickname, phone number, etc.) corresponding to the 1^{st} mode.

Referring to FIG. 24B, when receiving an input of a touch & drag action from a user in a status that there is no more Contact item to be scrolled (i.e., a last page display) (cf. FIG. 24A (b)), the mobile terminal 100 enters a 2^{nd} mode, keeps executing the phonebook application in the 2^{nd} mode, and can display a Contact list containing a plurality of Contact items. Hence, the user can be provided with the seamless Contact list despite the mode switching. In this instance, the Contact item contained in the Contact list of the 2^{nd} mode can indicate Contact information corresponding to the 2^{nd} mode.

Moreover, when receiving an input of a home screen display command, the mobile terminal 100 ends the phonebook application can then display a home screen of the 2^{nd} mode.

Referring now to FIG. 11, the mobile terminal 100 receives a command for a shift to a specific one of a plurality of screens corresponding to the 2^{nd} mode together with a mode switching command in the inputting step S1130 using the user input unit 130. The mobile terminal 100 enters the 2^{nd} mode corresponding to the input mode switching command in the switching step S1151 but can display the specific screen corresponding to the input shift command.

In particular, the mobile terminal 100 receives a selection action on an indicator of the specific application executable in the 1^{st} mode in the 1^{st} mode activated state as the shift command and can then display the specific screen containing an indicator of an application for performing an equal or similar function of the specific application by switching the 1^{st} mode to the 2^{nd} mode under the control of the controller 180. For instance, if the specific application is a common application, the indicator of the specific application can be contained in the specific screen. If the specific application is a dedicated application, the indicator of the application similar to the specific application can be contained in the specific screen.

The mobile terminal 100 displays a plurality of screen indicators respectively indicating a plurality of screens corresponding to the 2^{nd} mode on a prescribed region of the screen in the 1^{st} mode activated state, receives an input of a selection action on a specific one of a plurality of the screen indicators as a shift command, can then display a specific screen indicated by the specific screen indicator by switching the 1^{st} mode to the 2^{nd} mode under the control of the controller 180.

The specific screen display in case of the mode switching to the 2^{nd} mode is described in detail with reference to the accompanying drawings as follows.

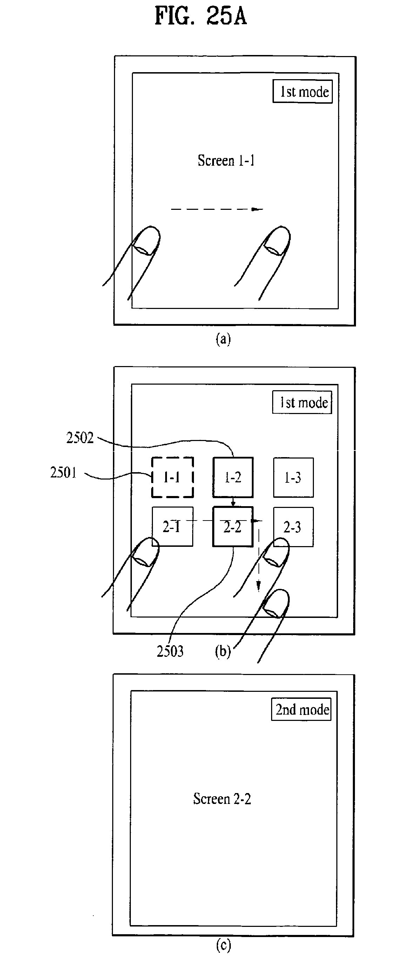

FIGs. 25A to 25C are diagrams for controlling a specific screen of a 2^{nd} mode to be displayed in case of a mode switching operation from a 1^{st} mode to the 2^{nd} mode according to the present invention. For clarity and convenience of the following description, assume that a current state is a 1^{st} mode activated state. In addition, assume that a switchable mode is a 2^{nd} mode.

Referring to FIG. 25A, when receiving an input of a switching command by a touch & drag action from a user (FIG. 25A (a)), the mobile terminal 100 can display identifiers 1-1 to 1-3 for a plurality of screens corresponding to a 1^{st} mode and identifiers 2-1 to 2-3 for a plurality of screens corresponding to a 2^{nd} mode (FIG. 25A (b)). In this instance, information (e.g., widget, application indicator, etc.) displayed on the corresponding screen can be contained in the identifier.

Subsequently, the mobile terminal 100 can select a specific identifier from the identifiers 1-1 to 1-3 and 2-1 to 2-3 by a touch & drag action or a touch action (FIG. 25A (b)). In particular, FIG. 25A (b) shows that the identifier 1-1 2501, the identifier 1-2 2502 and the identifier 2-2 2503 are sequentially selected.

While the specific identifier is selected, if the touch is removed from the screen or an identifier display interrupting command is input, the mobile terminal 100 can display a screen corresponding to the selected specific identifier (FIG. 25A (b)). In particular, FIG. 25A (c) shows that the screen corresponding to the identifier 2-2 2503, i.e., the second one of a plurality of the screens of the 2^{nd} mode is displayed.

In particular, in case (1) that the specific identifier (e.g., one of 1-1 to 1-3) selected in FIG. 25A (b) indicates the screen of the currently activated 1^{st} mode, the mobile terminal 100 performs the screen switching operation. In case (2) that the specific identifier (e.g., one of 2-1 to 2-3) selected in FIG. 25A (b) indicates the screen of the 2^{nd} mode (i.e., a switching target mode), the mobile terminal 100 can perform the mode switching operation.

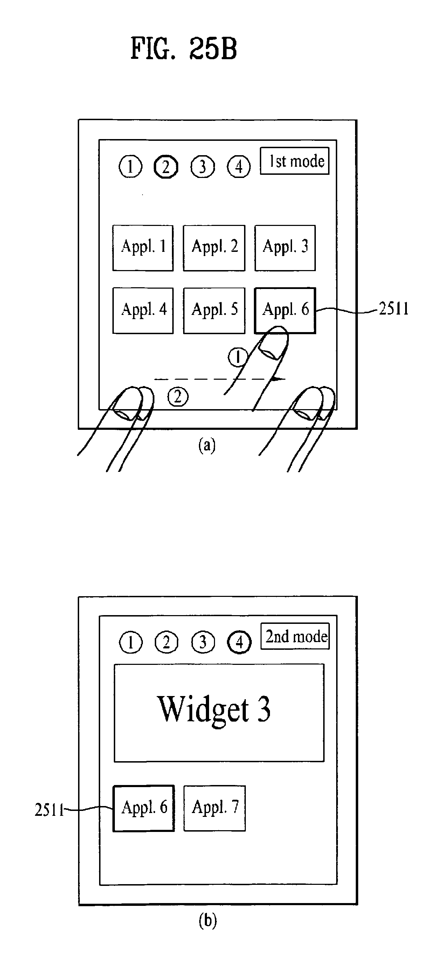

Referring to FIG. 25B, the mobile terminal displays a screen containing 1^{st} to 6^{th} application indicators in a 1^{st} mode activated state can then receive a selection action on the 6^{th} application indicator 2511 and an input of a mode switching command for switching to a 2^{nd} mode from a user (FIG. 25B (a)).

As the mode switching command for the switching to the 2^{nd} mode is input, the mobile terminal 100 enters the 2^{nd} mode, searches a plurality of screens corresponding to the 2^{nd} mode for the screen containing the 6^{th} application indicator 2511 selected in FIG. 25B (a) (FIG. 25B (b)).

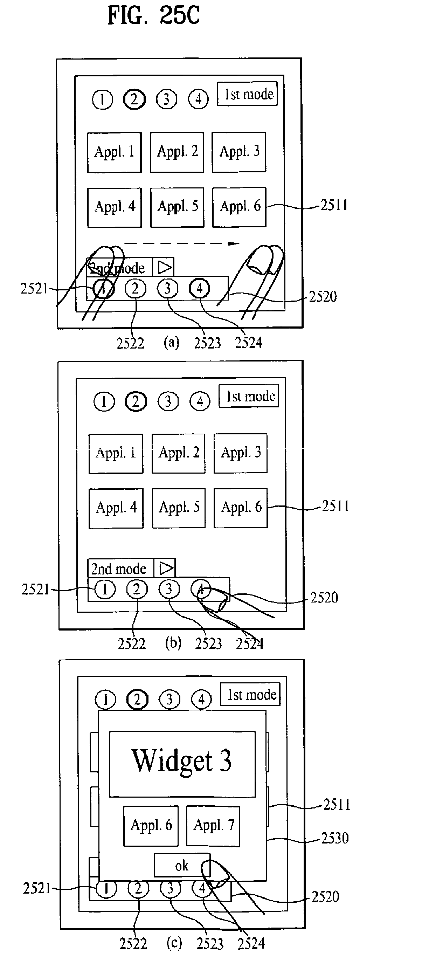

Referring to FIG. 25C, the mobile terminal 100 can display screen indicators 2521 to 2524 for a plurality of screens corresponding to a 2^{nd} mode on a prescribed region 2520 of the screen in a 1^{st} mode activated state (FIG. 25C (a)). In this instance, the screen indicator corresponding to the 2^{nd} mode is basically displayable or can be displayed when receiving an input of a 2^{nd} mode screen indicator displaying command from a user. Of course, the screen indicator corresponding to the 2^{nd} mode stops being displayed or can be displayed during a prescribed period of time only in accordance with a user selection.

When selecting a specific screen indicator by scrolling the screen indicators 2521 to 2524 in FIG. 25C (a) (1), receiving an input of a selection action of a specific one of the screen indicators 2521 to 2524 in FIG. 25C (b) (2), or receiving an input of a touch & drag action corresponding to a mode switching command after the selection of the specific screen indicator in FIG. 25C (a) or FIG. 25C (b) (3), the mobile terminal 100 performs a mode switching operation of the switching to the 2^{nd} mode can then display a specific screen indicated by the specific screen indicator in a 2^{nd} mode activated state.

Meanwhile, before the switching to the 2^{nd} mode or before displaying a specific screen in accordance with the 2^{nd} mode switching, the mobile terminal 100 can provide a user with a preview 2530 of the specific screen (FIG. 25C (c)). In this instance, the preview 2530 is provided in the 1^{st} or 2^{nd} mode activated state. In case of the 1^{st} mode activated state, information on the specific screen can be provided by being brought from the 2^{nd} mode.

Besides, the screen indicators of the 2^{nd} mode can be provided to any region of the screen and their positions are changeable in accordance with a user selection.

According to the present invention, in case of attempting store specific data in association with a 1^{st} mode in a 1^{st} mode activated state, if the specific data is already stored in association with a 2^{nd} mode, the mobile terminal 100 can perform various control operations related to the specific data under the control of the controller 180.

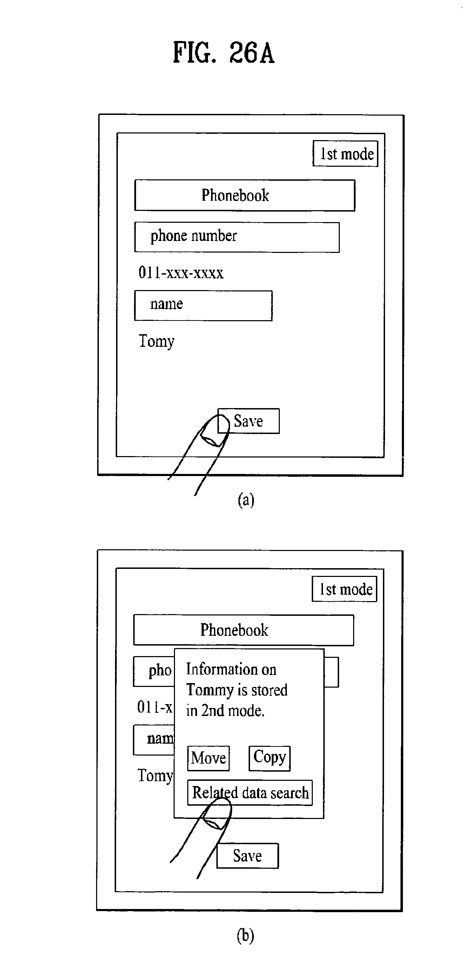

This is described with reference to FIGs. 26A to 27B.

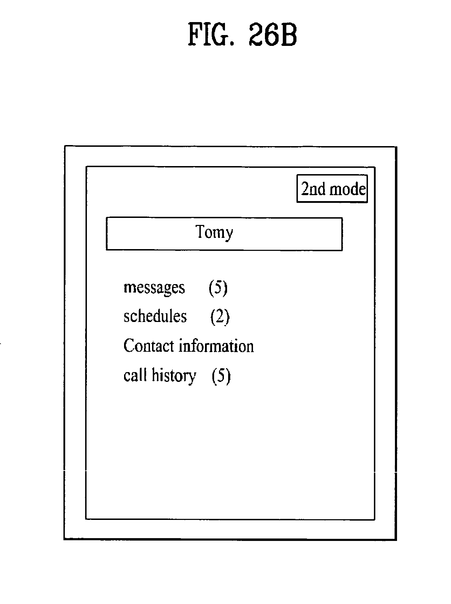

FIGs. 26A and FIG. 26B are diagrams for storing specific Contact information in accordance with a phonebook application execution in a 1^{st} mode according to the present invention.

Referring to FIG. 26A, if a specific Contact information is already stored in a 2^{nd} mode, the mobile terminal 100 enables a user to select at least one of 'move', 'copy' and 'related data search' for the specific Contact information.

For instance, if the shift is selected, the specific Contact information stored in the 2^{nd} mode is brought to a 1^{st} mode and then stored for the 1^{st} mode (corresponding to the 1^{st} mode only). If the copy is selected, the specific Contact information stored in the 2^{nd} mode is copied and then stored in the 1^{st} mode (corresponding to both of the 1^{st} mode and the 2^{nd} mode).

Referring to FIG. 26B, if the related data search is selected in FIG. 26A (b), the mobile terminal 100 enters the 2^{nd} mode can then provide data related to the specific Contact information. For instance, the data related to the specific Contact information can include a message exchanged between a specific Contact corresponding to the specific Contact information, a schedule containing a specific Contact as an attendant, a history of calls with a specific Contact, specific Contact information and the like.

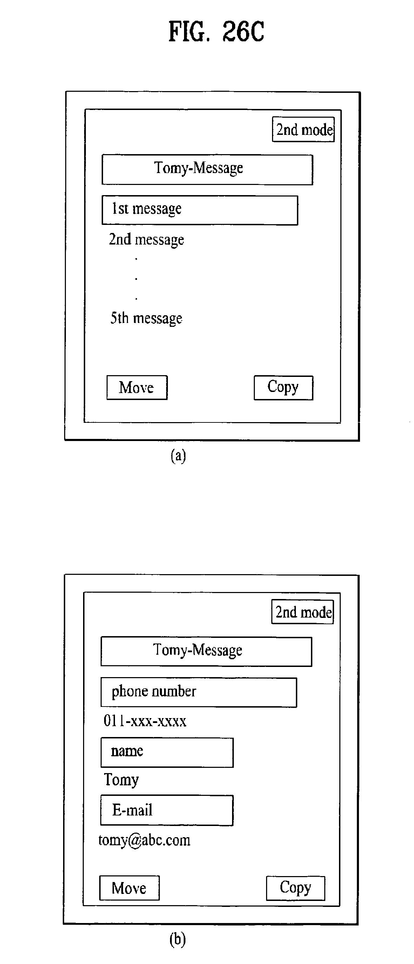

Referring to FIG. 26C, if 'message' is selected in FIG. 26B, the mobile terminal 100 can display a message list of messages exchanged with a specific Contact or a specific message (FIG. 26C (a)). If'Contact information' is selected in FIG. 26B, the mobile terminal 100 can display a specific Contact information stored in the 2^{nd} mode.

Moreover, if 'shift' is selected after selection of a specific message in FIG. 26C (a), the mobile terminal 100 brings the specific message to the 1^{st} mode can then save the specific message in the 1^{st} mode only. If 'copy' is selected, the mobile terminal 100 can save a specific message to correspond to both of the 1^{st} mode and the 2^{nd} mode. This is applicable to the specific Contact information in FIG. 26C (b).

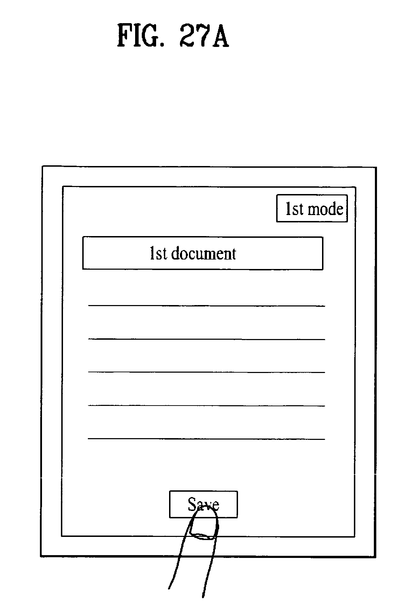

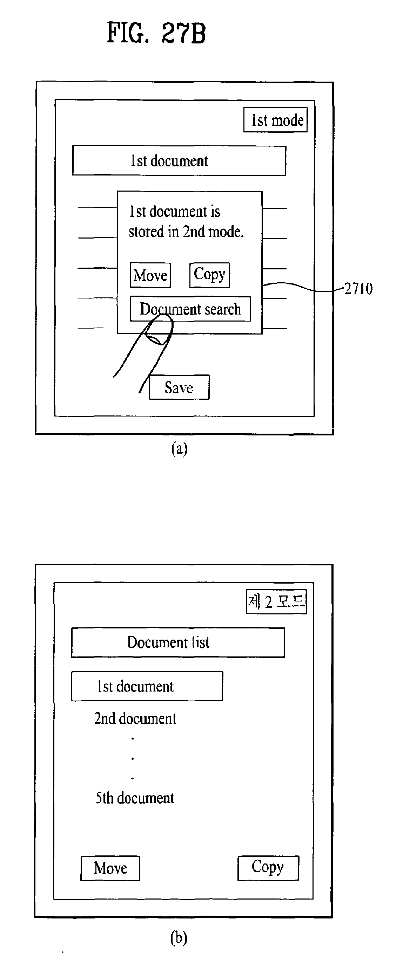

FIGs. 27A and FIG. 27B are diagrams for storing specific document in accordance with a document application execution in a 1^{st} mode according to the present invention.

Referring to FIG. 27A and FIG. 27B (a), if a specific document is already stored in a 2^{nd} mode, the mobile terminal 100 enables a user to select at least one of 'shift', 'copy' and 'document search' for the specific document.

For instance, if the shift is selected, the specific document stored in the 2^{nd} mode is brought to a 1^{st} mode and then stored for the 1^{st} mode (corresponding to the 1^{st} mode only). If the copy is selected, the specific document stored in the 2^{nd} mode is copied and then stored in the 1^{st} mode (corresponding to both of the 1^{st} mode and the 2^{nd} mode).

Referring to FIG. 27B (b), if the document search is selected in FIG. 27B (a), the mobile terminal 100 enters the 2^{nd} mode can then provide a list of documents stored in association with the 2^{nd} mode. For instance, the data related to the specific document can be identifiably displayed on the list. In addition, the document stored to correspond to both of the 1^{st} mode and the 2^{nd} mode can be identifiably displayed.

Moreover, if the shift is selected after selection of a specific message in FIG. 27B (b), the mobile terminal 100 brings the specific document to the 1^{st} mode can then save the specific document in the 1^{st} mode only. If the copy is selected, the mobile terminal 100 can save a specific document to correspond to both of the 1^{st} mode and the 2^{nd} mode.

In this instance, if the specific data is stored to correspond to both of the 1^{st} mode and the 2^{nd} mode, it can mean that the specific data is stored in a common storage region to be referred to in both of the 1^{st} mode and the 2^{nd} mode. Alternatively, it can mean that the specific data stored in a storage region corresponding to one mode can be freely referred to in the other mode.

If a conditional access if set on specific data to be shifted or copied, a security level equal to or higher than a predetermined reference is set on the specific data, a mode corresponding to the specific data has a security level higher than that of another mode, or a conditional access is set on a mode corresponding to the specific data, the mobile terminal 100 can shift or copy the specific data to another mode only if performing a valid authentication procedure. If the authentication procedure is not validly performed, the mobile terminal 100 is unable to shift or copy the specific data to another mode or can shift or copy a portion (e.g., a partial data having a security level smaller than a predetermined reference, a partial data on which a conditional access is not set, etc.) of the specific data to another mode only.

The modes mentioned in the present specification can variously include a religion mode, a hobby mode, a school mode and the like per type in addition to a private mode and a business mode. In addition, a plurality of modes can be set for each type.

In determining an application executed per mode in the present specification, it can designate an application in accordance with a user selection. In addition, it is also able to automatically designate an application to a corresponding mode in consideration of a property and type of the corresponding application. For instance, assuming that a mode field exists in a data structure of an application, it can designate an application to a corresponding mode defined in the mode field.

In each of a plurality of modes mentioned in the present specification, a user interface related to at least one of a voice based communication and a text based communication can be provided via the display unit 151 under the control of the controller 180. For instance, the voice based communication includes a voice call, a voice based chatting and the like. In another instance, the text based communication can include a message service, a text based chatting and the like. The user interface is displayed as a virtual key form on a touchscreen or can be provided as a button key form. In addition, the user interface provided in each of a plurality of modes can differ in position, shape, size and the like.

According to one embodiment of the present invention, the above-described mode switching controlling method in the mobile terminal can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The aforementioned embodiments for the mobile terminal and mode switching controlling method therein are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100) comprising:
a communication unit (110) configured to communicate with at least one external terminal;
a memory (160) configured to store at least first and second operating systems including at least first and second modes, respectively; and
a controller (180),
**characterized in that** the controller is configured to:
execute the first operating system and activate the first mode corresponding to the first operating system,
display a first information screen on a display unit corresponding to the activated first mode,
receive a switching command signal,
acquire whether the switching command signal is a mode switching command for switching the first mode to the second mode or a screen switching command for switching the first information screen to another information screen in the first mode using an input pattern of the received switching command signal,
switch from the first mode to the second mode by activating the second mode and deactivating the first mode if the switching command signal is the mode switching command, and
display said another information screen on the display unit corresponding to the activated first mode if the switching command signal is the screen switching command.

2. The mobile terminal of claim 1, wherein the controller is further configured to execute a specific application in the activated first mode, acquire a property of the specific application and then execute an application in the second mode to correspond to the acquired property, based on the activation of the second mode.

3. The mobile terminal of claim 2, wherein if the specific application is a common application common among the first and second modes, the controller is further configured to execute the specific application in the second mode, and
wherein if the specific application is a dedicated application dedicated only to the first mode, the controller is further configured to execute an application having a function equal or similar to that of the specific application in the second mode.

4. The mobile terminal of any one of claims 1 to 3, wherein if deactivating the first mode and activating the second mode, the controller is further configured to acquire a configuration property of the first information screen displayed in the first mode and display a second information screen screen corresponding to the acquired configuration property in the second mode.

5. The mobile terminal of any one of claims 1 to 4, wherein the controller is further configured to receive a shift command for shifting to a specific one of a plurality of the screens corresponding to the second mode together with the mode switching command for switching the first mode to the second mode, and to display a second information screen in the second mode.

6. The mobile terminal of claim 5, wherein the received shift command includes a selection action on an indicator of a specific application executed in the first mode, and
wherein the controller is further configured to display the second information screen to contain an indicator of an application equal or similar to the specific application executed in the first mode.

7. The mobile terminal of claim 5, wherein the controller is further configured to display, on the first information screen, a plurality of screen indicators indicating a plurality of second information screens corresponding to the second mode,
wherein a selection action on one of a plurality of the screen indicators corresponds to the mode switching command and the shift command, and
wherein the controller is further configured to switch to the second mode and display a specific screen indicated by the selected one screen indicator.

8. The mobile terminal of claim 1, wherein the switching command has a different input pattern for each of the first and second modes, and
wherein the screen switching command has a different input pattern for each of the information display screens in the activated first mode.

9. The mobile terminal of any one of claims 1 to 8, wherein the controller is further configured to receive a display command for displaying a multi-mode screen, and based on the received display command, to display a first display region including first mode indicators indicating dedicated first mode applications, to display a second display region including indicators indicating common application common to the first and second modes, and to display a third display region including second mode indicators indicating dedicated second mode applications.

10. The mobile terminal of claim 9, wherein the controller is further configured to receive a touch & drag action from a common indicator displayed on the second display region to the third display region or a touch action on a second mode indicator displayed on the third display region, and to switch from the first mode to the second mode and execute in the second mode a first application indicated by the common indicator or a second application indicated by the second mode indicator.

11. The mobile terminal of claim 1, wherein the controller is further configured to display a second information display screen based on the switching from the first mode to the second mode, said second information display screen including at least one a home screen, a most recently displayed screen and a designated screen.

12. The mobile terminal of any one of claims 1 to 11, wherein if the controller receives the mode switching command in a basic screen display state during the first mode, the controller is further configured to switch from the first mode to the second mode, and
wherein the basic screen at least one of an information display screen displaying an indicator of an application or function executed in common to the first and second modes, an information display screen displaying an indicator of a user favorite application, an information display screen displaying an indicator of an application randomly designated by the mobile terminal and a home screen of the first mode.

13. The mobile terminal of any one of claims 1 to 12, wherein the first and second modes are distinguished from each other according to at least one of a mode indicator, a database storage region, an operating system, a user access authority, an application configuration, a content configuration, a data configuration and an application property.

14. A method of controlling a mobile terminal, the method comprising:
storing, via a memory of the mobile terminal, at least first and second operating systems including at least first and second modes, respectively;
executing(S1110), via a controller of the mobile terminal, the first operating system and activating the first mode corresponding to the first operating system;
displaying(S1120), via a display unit of the mobile terminal, a first information screen corresponding to the activated first mode;
receiving(S1130), via the controller, a switching command signal;
acquiring(S1140), via the controller, whether the switching command signal is a mode switching command for switching the first mode to the second mode or a screen switching command for switching the first information screen to another information screen in the first mode using an input pattern of the received switching command signal;
switching(S1151), via the controller, from the first mode to the second mode by activating the second mode and deactivating the first mode if the switching command signal is the mode switching command; and
displaying(S1153), via the display unit, said another information screen corresponding to the activated first mode if the switching command signal is the screen switching command.

15. The method of claim 14, further comprising:
receiving(S1130, S1140), via the controller, a shift command for shifting to a specific one of a plurality of the screens corresponding to the second mode together with the mode switching command for switching the first mode to the second mode; and
displaying(S1161, S1163), via the display unit, a second information screen in the second mode,
wherein the received shift command includes a selection action on an indicator of a specific application executed in the first mode, and
wherein the displaying step displays the second information screen to contain an indicator of an application equal or similar to the specific application executed in the first mode.
